# EUROPEAN PATENT APPLICATION

(11) **EP 4 403 799 A1**
(43) Date of publication of application: **24.07.2024**
(21) Application number: 22869925.2
(22) Date of filing: 12.09.2022
(51) Int. Cl.: F16H 35/00, F03G 3/00

(54) **ROTATING DEVICE UTILIZING GRAVITY**

(30) Priority: 14.09.2021 JP 2021149211
(71) Applicant: Fujimoto, Hiyoshi, Koshi-shi, Kumamoto 861-1115 (JP)
(72) Inventor: Fujimoto, Hiyoshi, Koshi-shi, Kumamoto 861-1115 (JP)
(74) Representative: Weickmann & Weickmann PartmbB
(86) International application number: PCT/JP2022/033997
(87) International publication number: WO 2023/042778

(57) **Abstract**

A rotation body is rotated by utilizing gravity by positioning the positions of a plurality of mass points attached to the rotation body so that torque acting on the rotation body is always positive. A plurality of weight holding mechanisms 30 each provided at an installation position 21 on a main rotation body, separated by a rotation radius R from a rotation center 0 of the main rotation body 20 mounted rotatably with respect to a base body 10, and equiangularly spaced from one another with respect to the rotation center O are included, and the weight holding mechanisms each includes a weight support rotation body 31 provided rotatably with respect to the main rotation body, a weight body 32 turnably supported at a support portion 31a with respect to the weight support rotation body 31, and a force receiving rotation body 34 that tries to turn by receiving a turning force of the weight body itself by the weight body at a power receiving position. A power applying mechanism 50 that applies power that rotates the force receiving rotation body 34 in the weight holding mechanism 30 at a same angular velocity as the main rotation body in an opposite direction to a rotation direction of the main rotation body is included.

## Description

### Technical Field

The present invention relates to a rotation device utilizing gravity. More particularly, the invention relates to a device capable of rotating a rotation body with a small power by utilizing gravity.

### Background Art

Conventionally, as seen in Patent Literature 1, for example,
"a method for always obtaining power stably and permanently by connecting a tail end of a holding bar with a weight fixed to a tip end to a spur gear via a bearing on a driving wheel to make the holding bar rotatable, installing several holding bars horizontally and in a fixed direction, causing the driving wheel to generate a rotation motion by applying heavy pressure to only one side of the vertical driving wheel, that is, a method for obtaining power by a descending pressure of the weight attached to the driving wheel" (the claims of Patent Literature 1) has been known.

However, this related art is intended to obtain a permanent engine and does not utilize a natural law.

On the other hand, the inventor of the present application already have proposed a power generation device as Japanese Paten Application No. 2017-16824 (Japanese Patent Laid-Open No. 2020-56311 = Patent Literature 2).

The power generation device has an object "to provide a power generation device that enables connection with equipment using rotation as a power source by converting gravity into a rotation force" as described in the summary section of the same literature, and, as the solution, has "the power generation device that converts gravity into a rotation force, and utilizes the converted power as the power source, and includes a mechanism that creates an imbalance by not balancing gravity, with respect to the law of nature that tries to balance gravity, and generates a rotation force that creates energy of rotation in the imbalance".

The basic principle is as described in paragraphs 0011 to 0032 of the same literature.

Summarizing this, positions of a plurality of mass points m attached to the rotation body D are positioned (positioned in a horizontal state, for example) so that the moment (torque) acting on the rotation body D is always positive, and thereby the rotation body D is rotated.

This principle itself is correct.

The problem is how to position the positions of the plurality of mass points m attached to the rotation body D so that the moment (torque) acting on the rotation body D is always positive.

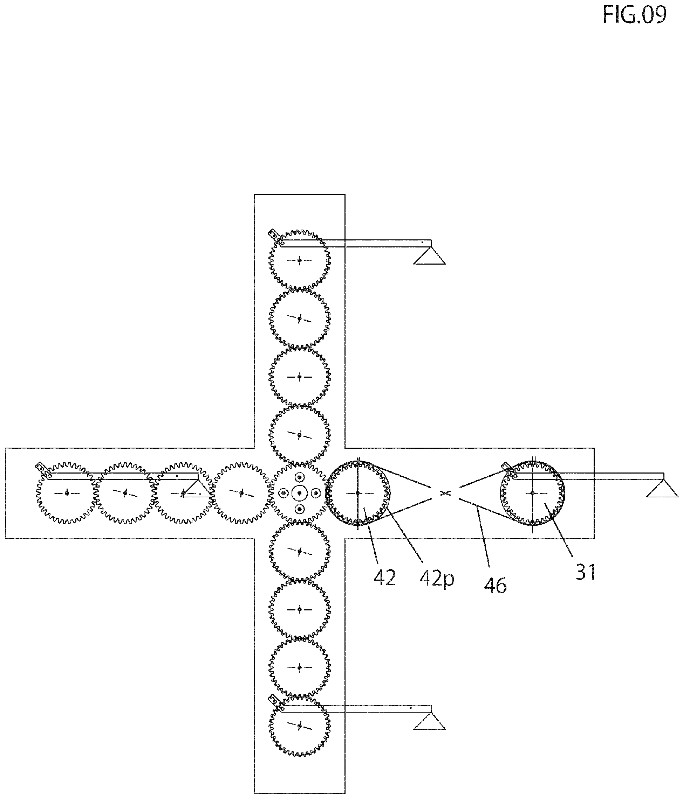

In this regard, the inventors of this case proposed the mechanism shown in Fig. 9 in the same literature.

However, by the subsequent experiment of the inventors, it has been found that in the mechanism shown in Fig 9, the stop wheel 60 strongly abuts on the fixed plate 62, and the transmission gear 16 does not rotate, as a result of which, the power generation device does not move.

### Citation List

### Patent Literature

Patent Literature 1: Japanese Patent Laid-Open No. 54-040948
Patent Literature 2: Japanese Patent Laid-Open No. 2020-56311

### Summary of Invention

### Technical Problem

An object of the present invention is to solve the above-described problems and provide a rotation device utilizing gravity capable of rotating a rotation body by utilizing gravity by positioning the positions of a plurality of mass points attached to the rotation body so that moment (torque) acting on the rotation body is always positive.

### Solution to Problem

In order to solve the above-described problem, the inventor of the present application has reached the present invention as a result of performing various experiments.

A rotation device utilizing gravity of the present invention includes
a base body,
a main rotation body mounted rotatably around a horizontal axis with respect to the base body, and
a plurality of weight holding mechanisms each provided at an installation position on the main rotation body, separated by a rotation radius R from a rotation center O of the main rotation body, and equiangularly spaced from one another with respect to the rotation center O,
wherein the weight holding mechanisms each includes
a weight support rotation body provided rotatably around the horizontal axis with respect to the main rotation body in the installation position,
a weight body that is a weight body turnably supported at a support portion other than a rotation center of the weight support rotation body with respect to the weight support rotation body, and tries to turn the weight body itself in a same direction as the main rotation body,
a turning force receiving member that is provided to be turnable concentrically with the rotation center of the weight support rotation body, and tries to turn by receiving a turning force of the weight body itself by the weight body at a first turning force receiving position, and
a force receiving rotation body that is provided to be rotatable concentrically with the rotation center of the weight support rotation body, and tries to rotate by receiving a turning force from the turning force receiving member at a second turning force receiving position,
when a distance from a rotation center in the force receiving rotation body to the first turning force receiving position is L1, and a distance from the rotation center to the second turning force receiving position is L2, L1 and L2 are configured to satisfy L1 < L2, and
the support portion of the weight body in the weight support rotation body is provided at a position where a reaction force from the turning force receiving member does not tries to rotate the weight support rotation body in a same direction as a rotation direction of the main rotation body,
the rotation device utilizing gravity further includes
a weight support rotation body interlocking mechanism that interlocks the weight support rotation body in the weight holding mechanism with rotation of the main rotation body to rotate the weight support rotation body at a same angular velocity as the main rotation body in an opposite direction to the rotation direction of the main rotation body,
a power applying mechanism that applies power that rotates the force receiving rotation body at a same angular velocity as the main rotation body in the opposite direction to the rotation direction of the main rotation body to the force receiving rotation body in at least one weight holding mechanism of the plurality of weight holding mechanisms, and
force receiving rotation body interlocking mechanisms that interlock at least force receiving rotation bodies of the weight holding mechanisms other than the weight holding mechanism in which the force receiving rotation body is rotated by the power applying mechanism, of the plurality of weight holding mechanisms with the rotation of the main rotation body to rotate the force receiving rotation bodies at a same angular velocity as the main rotation body in the opposite direction to the rotation direction of the main rotation body.

Since the rotation device utilizing gravity has the above-described configuration, the following operation effects are be obtained.

The plurality of weight holding mechanisms each provided at the installation position on the main rotation body, separated by the rotation radius R from the rotation center O of the main rotation body mounted rotatably around the horizontal axis with respect to the base body, and equiangularly spaced from one another with respect to the rotation center O each includes the weight body, the weight body is turnably supported at the support portion other than the rotation center of the weight support rotation body with respect to the weight support rotation body provided rotatably around the horizontal axis with respect to the aforementioned main rotation body in the aforementioned installation position and tries to turn the weight body itself in the same direction as the aforementioned main rotation body, and
the turning force is transmitted to the turning force receiving member provided to be turnable concentrically with the rotation center of the aforementioned weight support rotation body at the first turning force receiving position to try to turn the turning force receiving member, and further transmitted to the force receiving rotation body provided to be rotatable concentrically with the rotation center of the aforementioned weight support rotation body at the second turning force receiving position to try to turn the force receiving rotation body.

However, the turning force
is received by the weight support rotation body and the force receiving rotation body, and this state does not change depending on the rotation state of the main rotation body,
because the support portion of the weight body in the aforementioned weight support rotation body is provided at the position where the reaction force from the turning force receiving member does not tries to rotate the weight support rotation body in the same direction as the rotation direction of the aforementioned main rotation body, the aforementioned weight support rotation body interlocking mechanism interlocks the weight support rotation body with the rotation of the main rotation body and rotates the weight support rotation body at the same angular velocity as the main rotation body in the opposite direction to the rotation direction of the main rotation body, and
the aforementioned power applying mechanism applies the power that rotates the force receiving rotation body at the same angular velocity as the main rotation body in the opposite direction to the rotation direction of the aforementioned main rotation body to the force receiving rotation body, and/or the force receiving rotation body interlocking mechanism interlocks the force receiving rotation body with the rotation of the aforementioned main rotation body to rotate the force receiving rotation body at the same angular velocity as the main rotation body in the opposite direction to the rotation direction of the main rotation body.

Accordingly, if an energy loss due to friction or the like in the entire device is zero, this device will continue to operate, and the main rotation body will continue to rotate, but since there is an energy loss actually, the device does not continue to operate.

However, according to this device, the power applying mechanism applies the power that rotates the force receiving rotation body at the same angular velocity as the main rotation body in the opposite direction to the rotation direction of the aforementioned main rotation body to the force receiving rotation body in at least one weight holding mechanism of the plurality of weight holding mechanisms, and therefore, the device can continue to operate by this power.

Since the support portion of the weight body in the aforementioned weight support rotation body is provided at the position where the reaction force from the aforementioned turning force receiving member does not rotate the weight support rotation body in the same direction as the rotation direction of the aforementioned main rotation body (the rotation force to rotate the weight support rotation body in the opposite direction is generated, for example), the rotation of the weight support rotation body in the opposite direction to the rotation direction of the main rotation body is not hindered by providing the weight body, and
since when the distance from the rotation center in the aforementioned force receiving rotation body to the first turning force receiving position is L1, and the distance from the rotation center to the second turning force receiving position is L2, L1 and L2 are configured to satisfy L1 < L2, it is possible to decrease the power that rotates the force receiving rotation body in the weight holding mechanism at the same angular velocity as the main rotation body in the opposite direction to the rotation direction of the aforementioned main rotation body.

Moreover, since the power applying mechanism can be provided for at least one weight holding mechanism, and for the other weight holding mechanisms, the force receiving rotation bodies can be interlocked with the rotation of the aforementioned main rotation body to rotate at the same angular velocity as the main rotation body in the opposite direction to the rotation direction of the main rotation body by the force receiving rotation body interlocking mechanisms, the power by the above-described power applying mechanism can be decreased.

As above, according to the rotation device utilizing gravity of the present invention, it is possible to rotate the rotation body by utilizing gravity by positioning the positions of the mass points by the plurality of weight bodies attached to the rotation body so that the moment (torque) acting on the rotation body is always positive with the small power by the power applying mechanism.

Further, in order to solve the above-described problem, a rotation device utilizing gravity of the present invention includes
a base body,
a main rotation body mounted rotatably around a horizontal axis with respect to the base body, and
a plurality of weight holding mechanisms each provided at an installation position on the main rotation body, separated by a rotation radius R from a rotation center O of the main rotation body, and equiangularly spaced from one another with respect to the rotation center O,
wherein the weight holding mechanisms each includes
a weight support rotation body provided rotatably around the horizontal axis with respect to the main rotation body in the installation position,
a weight body that is a weight body turnably supported at a support portion other than a rotation center of the weight support rotation body with respect to the weight support rotation body, and tries to turn the weight body itself in a same direction as the main rotation body, and
a force receiving rotation body that is provided to be rotatable concentrically with the rotation center of the weight support rotation body, and tries to rotate by receiving a turning force of the weight body itself by the weight body at a power receiving position, and
the support portion of the weight body in the weight support rotation body is provided at a position where a reaction force from the force receiving rotation body does not tries to rotate the weight support rotation body in a same direction as a rotation direction of the main rotation body,
the rotation device utilizing gravity further includes
a weight support rotation body interlocking mechanism that interlocks the weight support rotation body in the weight holding mechanism with rotation of the main rotation body to rotate the weight support rotation body at a same angular velocity as the main rotation body in an opposite direction to the rotation direction of the main rotation body,
a power applying mechanism that applies power that rotates the force receiving rotation body at a same angular velocity as the main rotation body in the opposite direction to the rotation direction of the main rotation body to the force receiving rotation body in at least one weight holding mechanism of the plurality of weight holding mechanisms, and
force receiving rotation body interlocking mechanisms that interlock at least force receiving rotation bodies of the weight holding mechanisms other than the weight holding mechanism in which the force receiving rotation body is rotated by the power applying mechanism, of the plurality of weight holding mechanisms with the rotation of the main rotation body to rotate the force receiving rotation bodies at a same angular velocity as the main rotation body in the opposite direction to the rotation direction of the main rotation body.

Since the rotation device utilizing gravity has the above-described configuration, the following operation effects are obtained.

The plurality of weight holding mechanisms each provided at the installation position on the main rotation body, separated by the rotation radius R from the rotation center O of the main rotation body mounted rotatably around the horizontal axis with respect to the base body, and equiangularly spaced from one another with respect to the rotation center O each includes the weight body, the weight body is turnably supported at the support portion other than the rotation center of the weight support rotation body with respect to the weight support rotation body provided rotatably around the horizontal axis with respect to the aforementioned main rotation body in the aforementioned installation position and tries to turn the weight body itself in the same direction as the aforementioned main rotation body, and
the turning force is transmitted to the force receiving rotation body provided to be turnable concentrically with the rotation center of the aforementioned weight support rotation body at the power receiving position to try to turn the force receiving rotation body.

However, the turning force
is received by the weight support rotation body and the force receiving rotation body, and this state does not change depending on the rotation state of the main rotation body,
because the support portion of the weight body in the aforementioned weight support rotation body is provided at the position where the reaction force from the aforementioned turning force receiving member does not rotate the weight support rotation body in the same direction as the rotation direction of the aforementioned main rotation body, the aforementioned weight support rotation body interlocking mechanism interlocks the weight support rotation body with the rotation of the main rotation body to rotate the weight support rotation body at the same angular velocity as the main rotation body in the opposite direction to the rotation direction of the main rotation body,
the aforementioned power applying mechanism applies the power that rotates the force receiving rotation body at the same angular velocity as the main rotation body in the opposite direction to the rotation direction of the aforementioned main rotation body to the force receiving rotation body, and/or the force receiving rotation body interlocking mechanism interlocks the force receiving rotation body with the rotation of the aforementioned main rotation body to rotate the force receiving rotation body at the same angular velocity as the main rotation body in the opposite direction to the rotation direction of the main rotation body.

Accordingly, if an energy loss due to friction or the like in the entire device is zero, this device will continue to operate, and the main rotation body will continue to rotate, but since there is an energy loss actually, the device does not continue to operate if no power is applied by the power applying mechanism.

However, according to this device, the power applying mechanism applies the power that rotates the force receiving rotation body at the same angular velocity as the main rotation body in the opposite direction to the rotation direction of the main rotation body to the force receiving rotation body in at least one weight holding mechanism of the plurality of weight holding mechanisms, so that the device can be continued to operate by this power.

Since the support portion of the weight body in the aforementioned weight support rotation body is provided at the position where the reaction force from the aforementioned force receiving rotation body does not tries to rotate the weight support rotation body in the same direction as the rotation direction of the aforementioned main rotation body (the rotation force to rotate the weight support rotation body in the opposite direction is generated, for example), the rotation of the weight support rotation body in the opposite direction to the rotation direction of the main rotation body is not hindered by providing the weight body, and
since the power applying mechanism can be provided for at least one weight holding mechanism, and for the other weight holding mechanisms, the force receiving rotation bodies can be interlocked with the rotation of the aforementioned main rotation body to be rotated at the same angular velocity as the main rotation body in the opposite direction to the rotation direction of the main rotation body by the force receiving rotation body interlocking mechanisms, the power by the above-described power applying mechanism can be decreased.

As above, according to the rotation device utilizing gravity of the present invention, it is possible to rotate the rotation body by utilizing gravity by positioning the positions of the mass points by the plurality of weight bodies attached to the rotation body so that the moment (torque) acting on the rotation body is always positive with the small power by the power applying mechanism.

Further, in order to solve the above-described problem, a rotation device utilizing gravity of the present invention includes
a base body,
a main rotation body mounted rotatably around a horizontal axis with respect to the base body, and
a plurality of weight holding mechanisms each provided at an installation position on the main rotation body, separated by a rotation radius R from a rotation center O of the main rotation body, and equiangularly spaced from one another with respect to the rotation center O,
wherein the weight holding mechanisms each includes
a weight support rotation body provided rotatably around the horizontal axis with respect to the main rotation body in the installation position,
a weight body that is a weight body turnably supported at a support portion other than a rotation center of the weight support rotation body with respect to the weight support rotation body, and tries to turn the weight body itself in a same direction as the main rotation body,
a turning force receiving member that is provided to be turnable concentrically with the rotation center of the weight support rotation body, and tries to turn by receiving a turning force of the weight body itself by the weight body at a first turning force receiving position, and
a force receiving rotation body that is provided to be rotatable concentrically with the rotation center of the weight support rotation body, and tries to rotate by receiving a turning force from the turning force receiving member at a second turning force receiving position,
when a distance from a rotation center in the force receiving rotation body to the first turning force receiving position is L1, and a distance from the rotation center to the second turning force receiving position is L2, L1 and L2 are configured to satisfy L1 < L2, and
the support portion of the weight body in the weight support rotation body is provided at a position where a reaction force from the turning force receiving member does not tries to rotate the weight support rotation body in a same direction as a rotation direction of the main rotation body,
the rotation device utilizing gravity further includes
a weight support rotation body interlocking mechanism that interlocks the weight support rotation body in the weight holding mechanism with rotation of the main rotation body to rotate the weight support rotation body at a same angular velocity as the main rotation body in an opposite direction to the rotation direction of the main rotation body, and
a power applying mechanism that applies power that rotates the force receiving rotation body at a same angular velocity as the main rotation body in the opposite direction to the rotation direction of the main rotation body to the force receiving rotation body in at least one weight holding mechanism of the plurality of weight holding mechanisms.

Since the rotation device utilizing gravity has the above-described configuration, the following operation effects are obtained.

The plurality of weight holding mechanisms each provided at the installation position on the main rotation body, separated by the rotation radius R from the rotation center O of the main rotation body mounted rotatably around the horizontal axis with respect to the base body, and equiangularly spaced from one another with respect to the rotation center O each includes a weight body, the weight body is turnably supported at the support portion other than the rotation center of the weight support rotation body with respect to the weight support rotation body provided rotatably around the horizontal axis with respect to the aforementioned main rotation body in the aforementioned installation position and tries to turn the weight body itself in the same direction as the aforementioned main rotation body, and
the turning force is transmitted to the turning force receiving member provided to be turnable concentrically with the rotation center of the aforementioned weight support rotation body at the first turning force receiving position to try to turn the turning force receiving member, and further transmitted to the force receiving rotation body provided to be rotatable concentrically with the rotation center of the aforementioned weight support rotation body at the second turning force receiving position to try to turn the force receiving rotation body.

However, the turning force
is received by the weight support rotation body and the force receiving rotation body, and this state does not change depending on the rotation state of the main rotation body,
because the support portion of the weight body in the aforementioned weight support rotation body is provided at the position where the reaction force from the aforementioned turning force receiving member does not tries to rotate the weight support rotation body in the same direction as the rotation direction of the aforementioned main rotation body, the aforementioned weight support rotation body interlocking mechanism interlocks the weight support rotation body with the rotation of the main rotation body and rotates the weight support rotation body at the same angular velocity as the main rotation body in the opposite direction to the rotation direction of the main rotation body, and
the aforementioned power applying mechanism applies the power that rotates the force receiving rotation body at the same angular velocity as the main rotation body in the opposite direction to the rotation direction of the aforementioned main rotation body to the force receiving rotation body.

Accordingly, if an energy loss due to friction or the like in the entire device is zero, this device will continue to operate, and the main rotation body will continue to rotate, but since there is an energy loss actually, the device does not continue to operate if no power is applied by the power applying mechanism.

However, according to this device, the power applying mechanism applies the power that rotates the force receiving rotation body at the same angular velocity as the main rotation body in the opposite direction to the rotation direction of the aforementioned main rotation body to the force receiving rotation body in at least one weight holding mechanism of the plurality of weight holding mechanisms, and therefore the device can continue to operate by this power.

Since the support portion of the weight body in the aforementioned weight support rotation body is provided at the position where the reaction force from the aforementioned turning force receiving member does not tries to rotate the weight support rotation body in the same direction as the rotation direction of the aforementioned main rotation body (the rotation force to rotate the weight support rotation body in the opposite direction is generated, for example), the rotation of the weight support rotation body in the opposite direction to the rotation direction of the main rotation body is not hindered by providing the weight body,
and
since when the distance from the rotation center in the aforementioned force receiving rotation body to the aforementioned first turning force receiving position is L1, and the distance from the rotation center to the aforementioned second turning force receiving position is L2, L1 and L2 are configured to satisfy L1 < L2, it is possible to decrease the power that rotates the force receiving rotation body in the weight holding mechanism at the same angular velocity as the main rotation body in the opposite direction to the rotation direction of the aforementioned main rotation body.

As above, according to the rotation device utilizing gravity of the present invention, it is possible to rotate the rotation body by utilizing gravity by positioning the positions of the mass points by the plurality of weight bodies attached to the rotation body so that the moment (torque) acting on the rotation body is always positive with the small power by the power applying mechanism.

Further, in order to solve the above-described problem, a rotation device utilizing gravity of the present invention includes
a base body,
a main rotation body mounted rotatably around a horizontal axis with respect to the base body, and
a plurality of weight holding mechanisms each provided at an installation position on the main rotation body, separated by a rotation radius R from a rotation center O of the main rotation body, and equiangularly spaced from one another with respect to the rotation center O,
wherein the weight holding mechanisms each includes
a weight support rotation body provided rotatably around the horizontal axis with respect to the main rotation body in the installation position,
a weight body that is a weight body turnably supported at a support portion other than a rotation center of the weight support rotation body with respect to the weight support rotation body, and tries to turn the weight body itself in a same direction as the main rotation body, and
a force receiving rotation body that is provided to be rotatable concentrically with the rotation center of the weight support rotation body, and tries to rotate by receiving a turning force of the weight body itself by the weight body at a power receiving position, and
the support portion of the weight body in the weight support rotation body is provided at a position where a reaction force from the force receiving rotation body does not tries to rotate the weight support rotation body in a same direction as a rotation direction of the main rotation body,
the rotation device utilizing gravity further includes
a weight support rotation body interlocking mechanism that interlocks the weight support rotation body in the weight holding mechanism with rotation of the main rotation body to rotate the weight support rotation body at a same angular velocity as the main rotation body in an opposite direction to the rotation direction of the main rotation body, and
power applying mechanisms that apply power that rotates force receiving rotation bodies at a same angular velocity as the main rotation body in the opposite direction to the rotation direction of the main rotation body to the force receiving rotation bodies in all the weight holding mechanisms of the plurality of weight holding mechanisms.

Since the rotation device utilizing gravity has the above-described configuration, the following operation effects are obtained.

The plurality of weight holding mechanisms each provided at the installation position on the main rotation body, separated by the rotation radius R from the rotation center O of the main rotation body mounted rotatably around the horizontal axis with respect to the base body, and equiangularly spaced from one another with respect to the rotation center O each includes a weight body, the weight body is turnably supported at the support portion other than the rotation center of the weight support rotation body with respect to the weight support rotation body provided rotatably around the horizontal axis with respect to the aforementioned main rotation body in the aforementioned installation position and tries to turn the weight body itself in the same direction as the aforementioned main rotation body, and
the turning force is transmitted to the force receiving rotation body provided to be turnable concentrically with the rotation center of the aforementioned weight support rotation body at the power receiving position to try to turn the force receiving rotation body.

However, the turning force
is received by the weight support rotation body and the force receiving rotation body, and this state does not change depending on the rotation state of the main rotation body,
because the support portion of the weight body in the aforementioned weight support rotation body is provided at the position where the reaction force from the aforementioned turning force receiving member does not tries to rotate the weight support rotation body in the same direction as the rotation direction of the aforementioned main rotation body, the aforementioned weight support rotation body interlocking mechanism interlocks the weight support rotation body with the rotation of the main rotation body and rotates the weight support rotation body at the same angular velocity as the main rotation body in the opposite direction to the rotation direction of the main rotation body, and
the aforementioned power applying mechanism applies the power that rotates the force receiving rotation body at the same angular velocity as the main rotation body in the opposite direction to the rotation direction of the aforementioned main rotation body to the force receiving rotation body to rotate the force receiving rotation body at the same angular velocity as the main rotation body in the opposite direction to the rotation direction of the main rotation body.

Accordingly, if an energy loss due to friction or the like in the entire device is zero, this device will continue to operate, and the main rotation body will continue to rotate, but since there is an energy loss actually, the device does not continue to operate.

However, according to this device, the power applying mechanisms apply the power that rotates the force receiving rotation bodies at the same angular velocity as the main rotation body in the opposite direction to the rotation direction of the main rotation body to the force receiving rotation bodies in all the weight holding mechanisms, and therefore the device can continue to operate by this power.

Since the support portion of the weight body in the aforementioned weight support rotation body is provided at the position where the reaction force from the aforementioned turning force receiving member does not tries to rotate the weight support rotation body in the same direction as the rotation direction of the aforementioned main rotation body (the rotation force to rotate the weight support rotation body in the opposite direction is generated, for example), the rotation of the weight support rotation body in the opposite direction to the rotation direction of the main rotation body is not hindered by providing the weight body, and therefore the power by the above-described power applying mechanisms can be decreased.

As above, according to the rotation device utilizing gravity of the present invention, it is possible to rotate the rotation body by utilizing gravity by positioning the positions of the mass points by the plurality of weight bodies attached to the rotation body so that the moment (torque) acting on the rotation body is always positive with the small power by the power applying mechanism.

In this rotation device utilizing gravity,
an even number of four or more of the aforementioned weight holding mechanisms are provided, and
the power by the aforementioned power applying mechanism can be configured to be applied to at least a pair of weight holding mechanisms that are point-symmetrical with respect to the rotation center of the aforementioned main rotation body.

By the configuration like this, the weight balance on the left and right of the rotation center of the main rotation body is easily maintained, and more efficient rotation is easily obtained.

In the rotation device utilizing gravity,
the aforementioned power applying mechanism can be configured to have a worm gear with a self-locking function.

By the configuration like this, a large speed reduction ratio is obtained, and therefore, it becomes possible to rotate the force receiving rotation body at the same angular speed as the main rotation body in the opposite direction to the rotation direction of the main rotation body by the small power.

### Brief Description of Drawings

[Figure 1] Figure 1 is a schematic front view of an embodiment of a rotation device utilizing gravity according to the present invention.
[Figure 2] Figure 2 is a schematic front view of a force receiving rotation body interlocking mechanism 60 of the same embodiment.
[Figure 3] Figure 3 is a schematic front view of a weight support rotation body interlocking mechanism 40 of the same embodiment.
[Figure 4] Figure 4 is a partially omitted sectional plan view of the same embodiment.
[Figure 5] Figure 5 is a partially enlarged view of Figure 4 (a sectional plan view of a weight holding mechanism 30) .
[Figure 6] Figure 6 is a schematic front view of Figure 5 (a schematic front view of the weight holding mechanism 30) .
[Figure 7] Figure 7 is a schematic perspective view of the weight holding mechanism 30.
[Figure 8] Figure 8 is a schematic front view of the weight holding mechanism 30.
[Figure 9] Figure 9 is a schematic front view of a modification of the weight support rotation body interlocking mechanism 40.
[Figure 10] Figure 10 is a schematic front view of another modification of the weight support rotation body interlocking mechanism 40.
[Figure 11] Figure 11 is a schematic front view of another embodiment.
[Figure 12] Figure 12 is a schematic front view of another embodiment.
[Figure 13] Figure 13 is a schematic front view of another embodiment.
[Figure 14] Figure 14 is a schematic front view of another embodiment.
[Figure 15] Figure 15 is a partially omitted sectional plan view of Figure 14.
[Figure 16] Figure 16 is a schematic front view of another embodiment.
[Figure 17] Figure 17 is a schematic front view of another embodiment.
[Figure 18] Figure 18 is a partially omitted sectional plan view of Figure 17.
[Figure 19] Figure 19 is a view showing a modification of a power applying mechanism 50, (a) is a schematic front view, and (b) is a schematic rear view.
[Figure 20] Figure 20 is a partially omitted sectional plan view mainly showing the above-described modification of the power applying mechanism 50.
[Figure 21] Figure 21 is a view showing another modification of the power applying mechanism 50, (a) is a schematic front view, and (b) is a schematic rear view.
[Figure 22] (a) is a partially omitted sectional plan view mainly showing the above-described modification of the power applying mechanism 50, and (b) is a partially omitted sectional view taken along line b-b in Figure (a).
[Figure 23] Figure 23 is a view showing another application example of the power applying mechanism 50, (a) is a schematic front view, and (b) is a schematic rear view.
[Figure 24] Figure 24 is a view showing another application example of the power applying mechanism 50, (a) is a schematic front view, and (b) is a schematic rear view.

### Description of Embodiments

Hereinafter, embodiments of a rotation device utilizing gravity according to the present invention will be described with reference to the drawings. Note that in each of the drawings, the same parts and corresponding parts are assigned with the same reference signs.

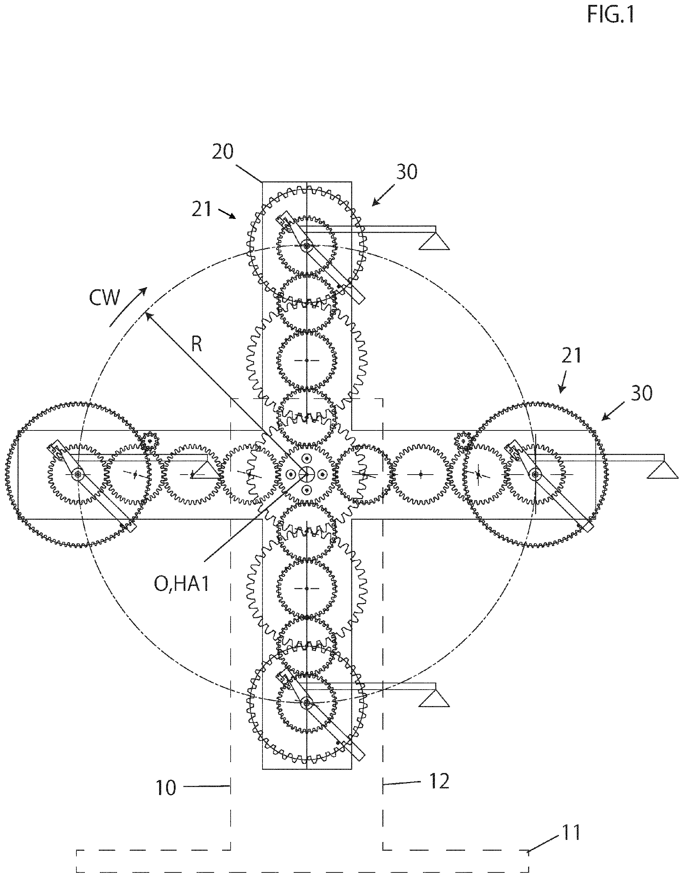

As shown in Figure 1 to Figure 4, the rotation device utilizing gravity of this embodiment includes
a base body 10,
a main rotation body 20 mounted rotatably around a horizontal axis HA1 with respect to the base body 10, and
a plurality of weight holding mechanisms 30 each provided at an installation position 21 on the main rotation body 20, separated by a rotation radius R from a rotation center O of the main rotation body 20, and equiangularly spaced from one another with respect to the rotation center O.

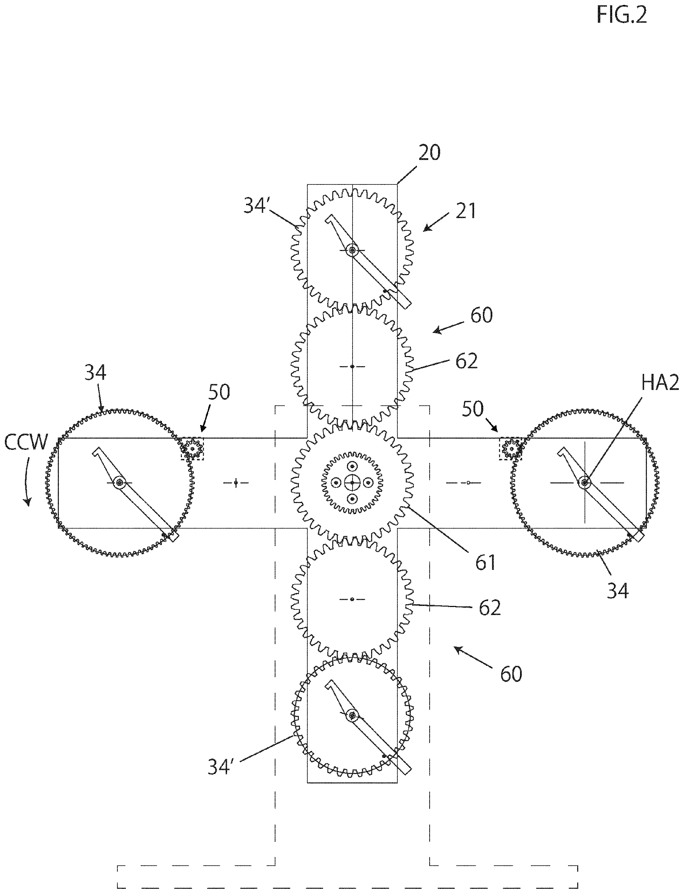

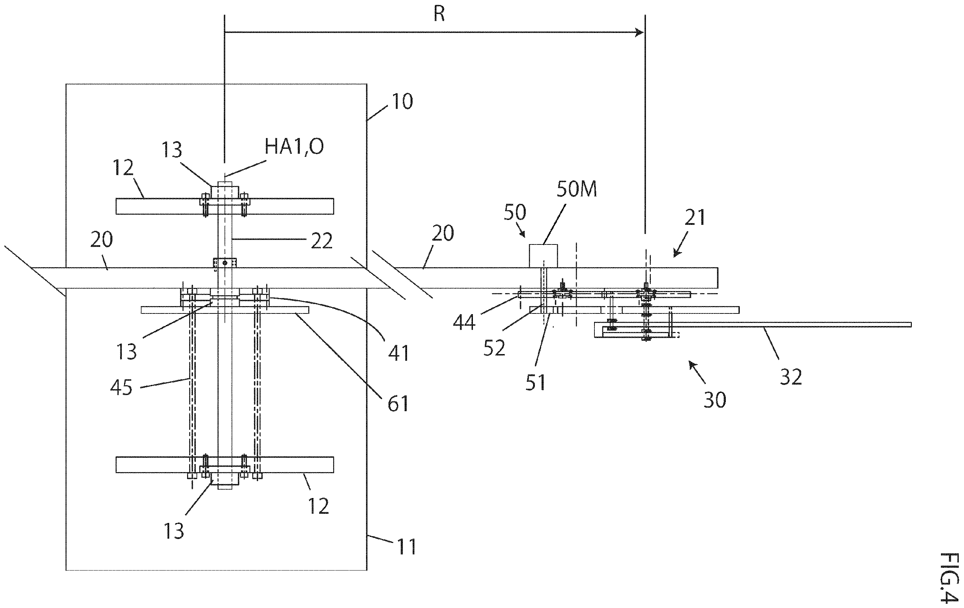

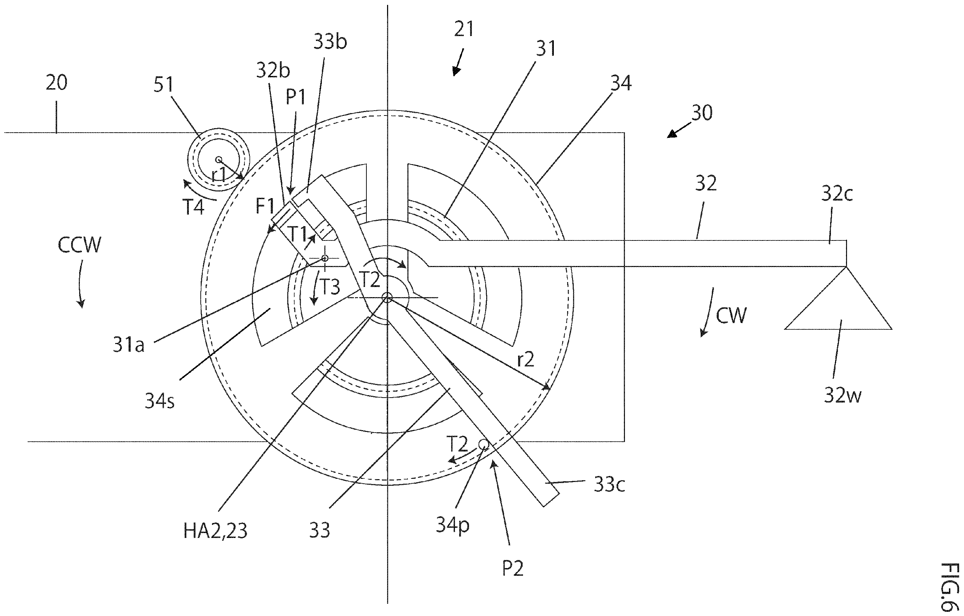

As shown in Figure 4 to Figure 7 (mainly Figure 6), the weight holding mechanisms 30 each includes
a weight support rotation body 31 provided rotatably around a horizontal axis HA2 (see Figure 2) with respect to the main rotation body 20,
a weight body 32 that is a weight body 32 turnably supported at a support portion 31a other than the rotation center (HA2) of the weight support rotation body 31 with respect to the weight support rotation body 31, and tries to turn the weight body 32 itself in a same direction CW as the main rotation body 20,
a turning force receiving member 33 that is provided to be turnable concentrically with the rotation center (HA2) of the aforementioned weight support rotation body 31, and tries to turn by receiving a turning force T1 of the weight body 32 itself by the weight body 32 at a first turning force receiving position P1, and
a force receiving rotation body 34 that is provided to be rotatable concentrically with the rotation center (HA2) of the aforementioned weight support rotation body 31, and tries to rotate by receiving a turning force T2 from the aforementioned turning force receiving member 33 at a second turning force receiving position P2.

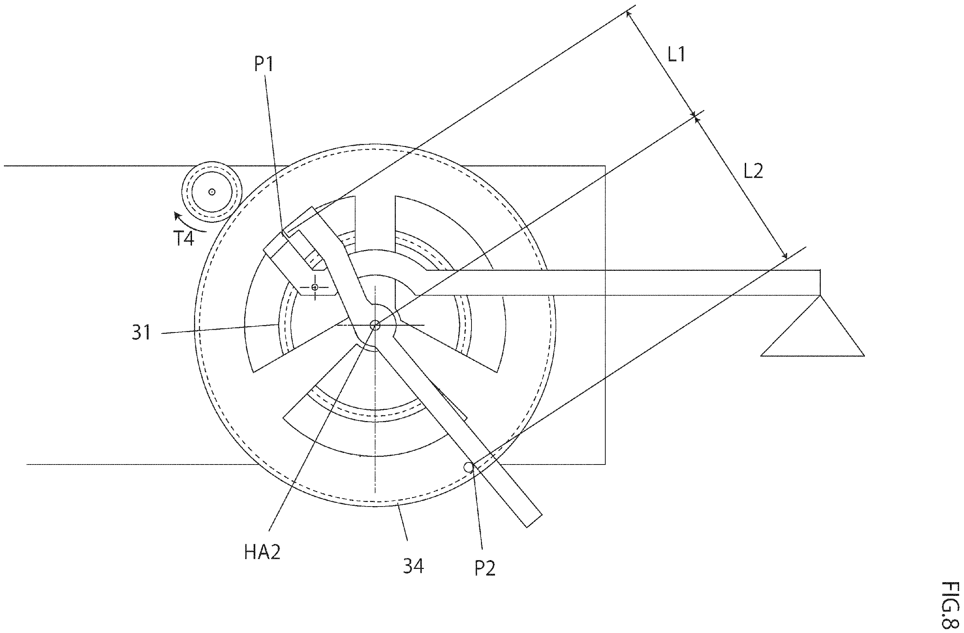

When a distance from the rotation center (HA2) in the force receiving rotation body 34 to the aforementioned first turning force receiving position P1 is L1 (see Figure 8), and a distance from the rotation center (HA2) to the aforementioned second turning force receiving position P2 is L2 (see Figure 8), L1 and L2 are configured so that L1 < L2 is satisfied.

Further, the support portion 31a of the weight body 32 in the weight support rotation body 31 is provided at a position where a reaction force F1 (Figure 6) from the turning force receiving member 33 does not rotate the weight support rotation body 31 in the same direction CW as the rotation direction of the aforementioned main rotation body 20. Note that the support portion 31a is desirably provided at a position where the reaction force F1 (Figure 6) from the turning force receiving member 33 generates a rotation force T3 that tries to rotate the weight support rotation body 31 in an opposite direction CCW to the rotation direction of the main rotation body 20, and this is the case in this embodiment.

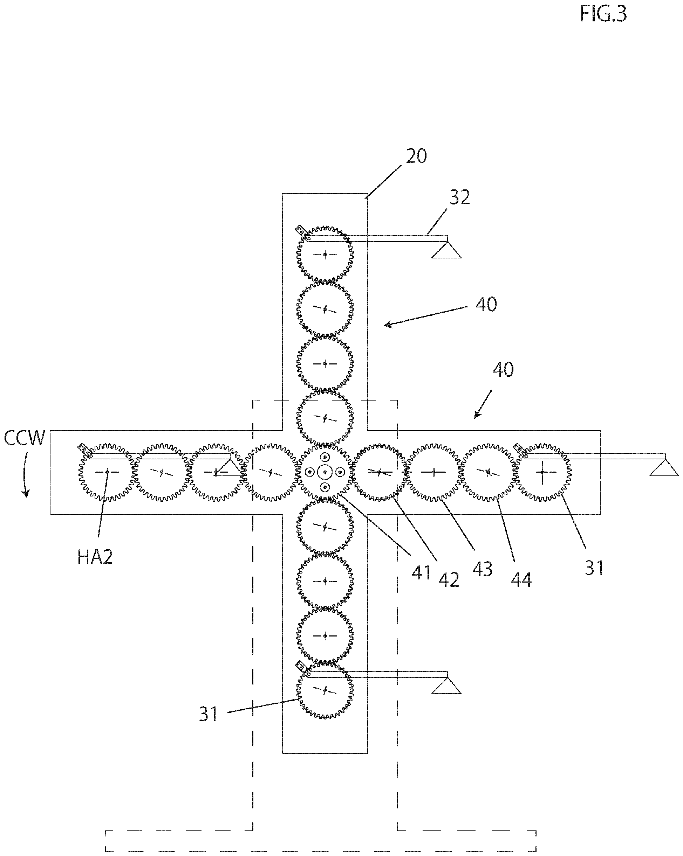

As shown in Figure 1 to Figure 6, the rotation device utilizing gravity of this embodiment further includes
weight support rotation body interlocking mechanisms 40 (Figure 3) that each interlocks the weight support rotation body 31 in the weight holding mechanism 30 with rotation of the main rotation body 20 to rotate the weight support rotation body 31 at a same angular velocity as the main rotation body 20 in the opposite direction CCW to the rotation direction of the main rotation body 20,
a power applying mechanism 50 (Figure 2, Figure 4) that applies a power T4 (Figure 6) that rotates the force receiving rotation body 34 at a same angular velocity as the main rotation body 20 in the opposite direction CCW to the rotation direction of the main rotation body 20 to the force receiving rotation body 34 in at least one weight holding mechanism 30 of the plurality of weight holding mechanisms 30, and
force receiving rotation body interlocking mechanisms 60 (Figure 2) that interlock force receiving rotation bodies 34' (Figure 2) in the weight holding mechanisms 30 other than the weight holding mechanism 30 in which the force receiving rotation body 34 is rotated by the aforementioned power applying mechanism 50, of the plurality of weight holding mechanisms 30, with the rotation of the main rotation body 20 to rotate the force receiving rotation bodies 34' at a same angular velocity as the main rotation body 20 in the opposite direction CCW to the rotation direction of the main rotation body 20.

Note that in this embodiment, as shown in Figure 4 and the like, the power applying mechanism 50 has a configuration including a motor 50M, and a drive gear 51 fixed to an output shaft 52 of the motor 50M. In this embodiment, the power applying mechanisms 50 are provided for the two weight holding mechanisms 30, but the power applying mechanism 50 may be provided for only one weight holding mechanism 30, or may be provided for each of all the weight holding mechanisms 30.The force receiving rotation body interlocking mechanisms 60 may be provided only for the force receiving rotation body 34' of the plurality of weight holding mechanisms 30 as shown in Figure 2, except for the weight holding mechanism 30 in which the force receiving rotation body 34 is rotated by the power applying mechanisms 50 described above, or may be provided for the receiving rotators 34 of all weight holding mechanisms 30.

Since this rotation device utilizing gravity has the above-described configuration, the following operation effects are obtained.

The plurality of weight holding mechanisms 30 each provided at the installation position 21 on the main rotation body 20, separated by the rotation radius R from the rotation center O of the main rotation body 20 mounted rotatably around the horizontal axis (HA1) with respect to the base body 10, and equiangularly spaced from one another with respect to the rotation center O each includes the weight body 32, and the weight body 32 is turnably supported at the support portion 31a other than the rotation center (HA2) of the weight support rotation body 31 with respect to the weight support rotation body 31 provided rotatably around the horizontal axis (HA1) with respect to the main rotation body 20 in the weight holding mechanism 30, and tries to turn the weight body 32 itself in the same direction CW as the main rotation body 20 (see Figure 6).

The turning force (torque) T1 is transmitted to the turning force receiving member 33 provided to be rotatable concentrically with the rotation center (HA2) of the weight support rotation body 31, at the first turning force receiving position P1, and tries to turn the turning force receiving member 33 in the clockwise direction CW (see T2) . Further, the turning force T2 (accordingly T1) is transmitted to the force receiving rotation body 34 provided to be rotatable concentrically with the rotation center (HA2) of the weight support rotation body 31 at the second turning force receiving position P2 to try to turn the force receiving rotation body 34 in the clockwise direction CW with the turning force T2.

However, this turning force T2 (T1)
is received by the weight support rotation body 31 and the force receiving rotation body 34, and this state (state where the weight body 32 is maintained substantially in the horizontal direction as shown in Figure 6 in this embodiment) does not change depending on the rotation state of the main rotation body 20,
because the support portion 31a of the weight body 32 in the weight support rotation body 31 is provided at the position where the reaction force F1 from the aforementioned turning force receiving member 33 does not tries to rotate the weight support rotation body 31 in the same direction as the rotation direction of the main rotation body 20 (position where the rotation force T3 that tries to rotate the weight support rotation body 31 in the opposite direction CCW is generated in this embodiment), the weight support rotation body interlocking mechanism 40 (Figure 3) interlocks the weight support rotation body 31 with rotation of the main rotation body 20 to rotate the weight support rotation body 31 at the same angular velocity as the main rotation body 20 in the opposite direction CCW to the rotation direction of the main rotation body 20, and
the power applying mechanism 50 applies the power T4 that rotates the force receiving rotation body 34 at the same angular velocity as the main rotation body 20 in the opposite direction CCW to the rotation direction of the main rotation body 20 to the force receiving rotation body 34, and/or the force receiving rotation body interlocking mechanism 60 (Figure2) interlocks the force receiving rotation body 34 with the rotation of the aforementioned main rotation body 20 to rotate the force receiving rotation body 34 at the same angular speed as the main rotation body 20 in the opposite direction CCW to the rotation direction of the main rotation body 20.

That is to say, in this embodiment, as shown in Figure 1, the main rotation body 20 rotates in the clockwise direction CW, in the state of the orientation in which the weight bodies 32 are maintained on the right side substantially in the horizontal direction in the installation positions 21 of the weight holding mechanisms 30 on the main rotation body 20, and the basic principle (principle that the rotation body D can be rotated by positioning the positions of the plurality of mass points m attached to the rotation body D so that the moment (torque) acting on the rotation body D is always positive) described in paragraphs 0011 to 0032 of Patent Literature 1 described above is realized.

Accordingly, if an energy loss due to friction or the like in this entire device is zero, this device will continue to operate, and the main rotation body 20 will continue to rotate, but since there is an energy loss actually, the device does not continue to operate.

However, according to this device, the power applying mechanism 50 applies the power T4 that rotates the force receiving rotation body 34 at the same angular velocity as the main rotation body 20 in the opposite direction CCW to the rotation direction of the main rotation body 20 to the force receiving rotation body 34 in at least one weight holding mechanism 30 of the plurality of weight holding mechanisms 30, and therefore, the device can continue to operate by the power T4.

Since the support portion 31a of the weight body 32 in the weight support rotation body 31 is provided at the position where the reaction force F1 from the turning force receiving member 33 does not tries to rotate the weight support rotation body 31 in the same direction as the rotation direction of the main rotation body 20 (position where the rotation force T3 to tries to rotate the weight support rotation body 31 in the opposite direction CCW is generated in this embodiment), the rotation of the weight support rotation body 31 in the opposite direction CCW to the rotation direction of the main rotation body 20 is not hindered by providing the weight body 32. Rather, the rotation force T3 assists in rotation of the weight support rotation body 31 in the opposite direction CCW to the rotation direction of the main rotation body 20 in this embodiment.

Further, as shown in Figure 8,
since when the distance from the rotation center (HA2) in the force receiving rotation body 34 to the first turning force receiving position P1 is L1, and the distance from the rotation center (HA2) to the second turning force receiving position P2 is L2, L1 and L2 is configured to satisfy L1<L2, the power T4 that rotates the force receiving rotation body 34 in the weight holding mechanism 30 at the same angular velocity as the main rotation body 20 in the opposite direction CCW to the rotation direction of the main rotation body 20 can be decreased.

Moreover, the power applying mechanism 50 can be provided for the at least one weight holding mechanism 30, and for the other weight holding mechanisms 30, the force receiving rotation bodies 34 can be interlocked with the rotation of the main rotation body 20 to be rotated at the same angular velocity as the main rotation body 20 in the opposite direction CCW to the rotation direction of the main rotation body 20 by the force receiving rotation body interlocking mechanisms 60, so that the power T4 by the above-described power applying mechanism 50 can be further decreased.

Further, as in this embodiment, by composing the force receiving rotation body 34 of a gear, and sufficiently decreasing a radius r1 of a drive gear 51 by the power applying mechanism 50 with respect to a radius r2 of the force receiving rotation body 34 as shown in Figure 6, it is possible to further decrease the drive force T4 required to maintain the state where the weight body 32 is substantially in the horizontal direction as shown in Figure 6, Figure 1 and the like.

As above, according to the rotation device utilizing gravity of the present invention, it is possible to rotate the rotation body by utilizing gravity by positioning the positions of the mass points (located between the support portions 31a and the weights 32w of the weight support rotation bodies 31 though not illustrated) of the plurality of weight bodies 32 attached to the rotation body so that the moment (torque) acting on the rotation body is always positive by small power.

In the rotation device utilizing gravity of this embodiment, the four weight holding mechanisms 30 are provided, and the power by the power applying mechanism 50 is configured to be applied to at least a pair (left and right in Figure 1) of weight holding mechanisms 30 that are point-symmetrical with respect to the rotation center O of the main rotation body 20.

By this configuration, it becomes easier to balance the weight on the left and right of the rotation center O of the main rotation body 20, and it becomes easy to obtain more efficient rotation.

Hereinafter, each of the components will be more particularly described, but the present invention is not intended to be limited to these specific structures.

As shown in Figure 1 and Figure 4, the base body 10 has a bottom portion 11, and a front and rear support walls 12 and 12 raised from the bottom portion 11. The base body 10 is installed on the ground.

The main rotation body 20 is a plate-shaped body in a cross shape in front view, and a shaft 22 (Figure 4) fixed to a center portion thereof is rotatably supported at the support walls 12 and 12 of the base body with bearing members 13, as shown in Figure 1 and Figure 3. The shaft 22 rotates with the main rotation body 20, and therefore can be used as an output shaft for extracting the power from this device.

A front shape of the main rotation body 20 is not limited to the cross shape, and a disc shape, a radial shape or the like can be adopted.

### <Weight Holding Mechanism 30> (see Figure 4 to Figure 7)

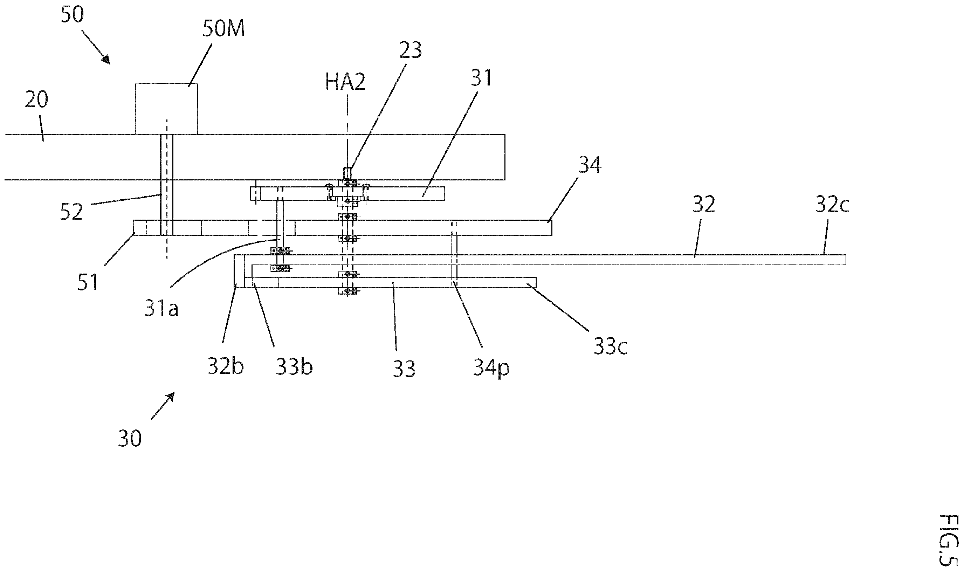

The weight support rotation body 31 is composed of a spur gear (hereinafter, also simply referred to as a gear) provided rotatably with respect to the main rotation body 20 by a shaft 23 (Figure 5) provided at the main rotation body 20.

The weight support rotation body 31 is provided with a pin (31a) composing the support portion 31a, and the weight body 32 is provided to be swingable with respect to the weight support rotation body 31 by this pin (shaft) 31a.

The weight body 32 is a lever-shaped member, and a weight 32w is provided at one end (in the illustrated case, a right end) 32c thereof. The other end (left end) 32b abuts on one end (upper end) 33b of the turning force receiving member 33 at the first turning force receiving position P1.

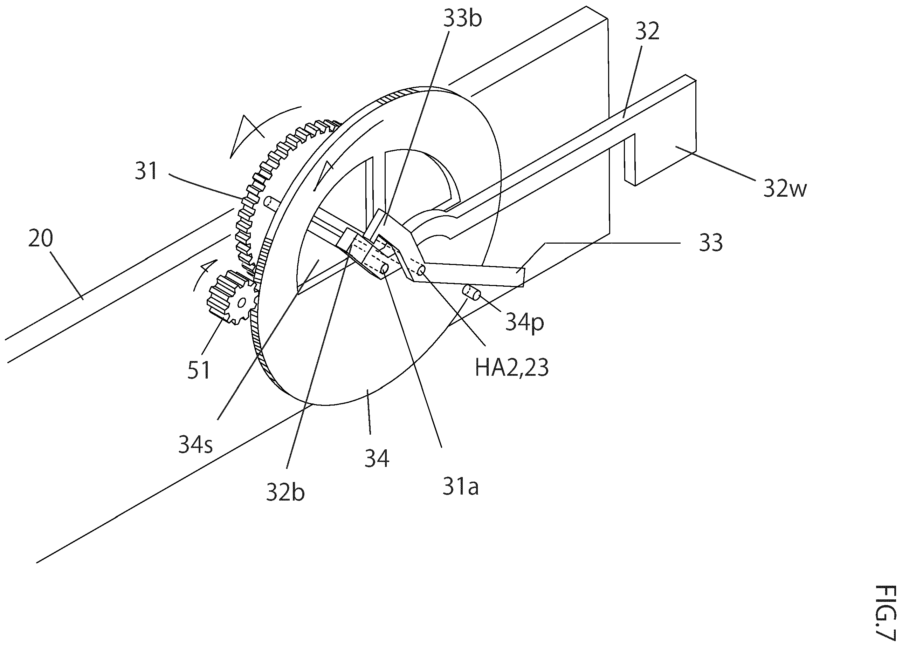

Note that between Figure 6 and Figure 7, shapes of respective members composing the weight holding mechanisms 30 are different to some extent, but both the shapes can be adopted.

The turning force receiving member 33 is a lever-shaped member provided turnably with respect to the main rotation body 20 by the shaft 23, the one end 33b abuts on the other end 32b of the weight body 32, and the other end 33c abuts on a pin 34p provided at the force receiving rotation body 34 in the aforementioned second turning force receiving position P2.

The force receiving rotation body 34 is composed of a gear provided rotatably with respect to the main rotation body 20 by the shaft 23 (HA2) provided at the main rotation body 20.

The force receiving rotation body 34 has a larger diameter than the weight support rotation body 31, and is provided with a space 34s for avoiding interference with the pin 31a provided at the weight support rotation body 31.

Since in this embodiment, the weight support rotation body 31, the force receiving rotation body 34, the weight body 32, and the turning force receiving member 33 are disposed in this order, seen from a back side (upper side in Figure 5), and since the pin (shaft) 31a that supports the weight body 32 penetrates through the force receiving rotation body 34, the force receiving rotation body 34 is provided with the space 34s for avoiding interference with the pin 31a.

Note that as described later, the respective members that compose the weight holding mechanism 30 do not move relatively among the respective members, but rotate around the rotation center O of the main rotation body 20 while maintaining a same orientation as the entire weight holding mechanism 30, and therefore, if the above-described space 34s is provided, the pin 31a and the force receiving rotation body 34 do not interfere with each other.

### <Weight Support Rotation Body Interlocking Mechanism 40> (see Figure 3)

The weight support rotation body interlocking mechanism 40 has the weight support rotation body (gear) 31, a center gear 41 fixed to the base body 10 to be unable to rotate, and intermediate gears 42, 43 and 44 provided between these gears 31 and 41. The intermediate gears 42, 43, and 44 are respectively provided rotatably with respect to the main rotation body 20. These gears 41 to 44 and 31 are all gears with a same pitch circle diameter, and a same number of teeth.

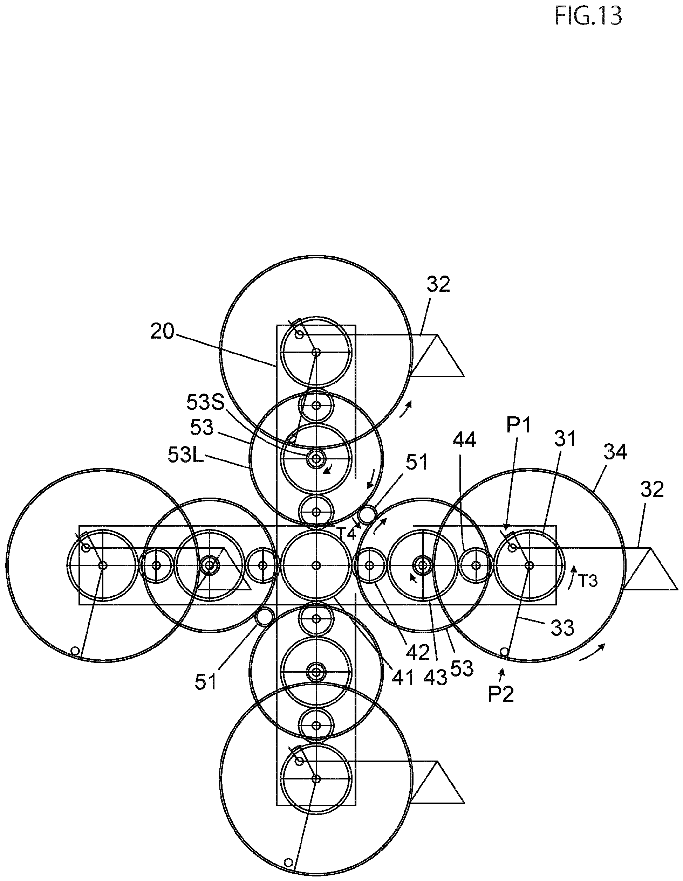

Accordingly, when the main rotation body 20 rotates around the base body 10 (center gear 41), the weight support rotation body (gear) 31 is interlocked with the rotation of the main rotation body 20 to rotate at the same angular velocity as the main rotation body 20 in the opposite direction CCW to the rotation direction of the main rotation body 20. (Note that if the center gear 41 and the gear 31 composing the weight support rotation body are gears with the same pitch circle diameter, and the same number of teeth, it is possible to properly set pitch circler diameters of the intermediate gears 42, 43 and 44 and the numbers of teeth thereof (see Figure 13, for example)).

As a result, the weight support rotation body (gear) 31 rotates around the base body 10 (center gear 41) while maintaining the same orientation.

Note that in Figure 4, reference sign 45 denotes a bolt that fixes the center gear 41 to the base body 10 with a center gear 61 described later.

### <Power Applying Mechanism 50〉 (see Figure 2 and Figure 4)

The drive applying mechanism 50 is configured by including the motor 50M, and the drive gear 51 fixed to the output shaft 52 of the motor 50M.

The drive gear (pinion gear) 51 is fixed to the output shaft 52 of the motor 50M, the drive gear 51 is meshed with the force receiving rotation body (gear) 34, and rotates the force receiving rotation body 34 at the same angular velocity as the main rotation body 20 in the opposite direction CCW to the rotation direction of the main rotation body 20.

As a result, the force receiving rotation body (gear) 34 rotates around the base body 10 while maintaining the same orientation.

### <Force Receiving Rotation Body Interlocking Mechanism 60> (See Figure 2)

The force receiving rotation body interlocking mechanism 60 has a force receiving rotation body (gear) 34', the center gear 61 fixed to the base body 10 to be unable to rotate, and an intermediate gear 62 provided between these gears 61 and 34' . The intermediate gear 62 is provided rotatably with respect to the main rotation body 20. These gears 61, 62, and 34' are gears having a same pitch circle diameter and a same number of teeth. (Note that if the center gear 61 and the gear 34 composing the force receiving rotation body are the gears having the same pitch circle diameter and the same number of teeth, a pitch circle diameter and a number of teeth of the intermediate gear 62 can be properly set) .

Accordingly, when the main rotation body 20 rotates around the base body 10 (center gear 61), the force receiving rotation body (gear) 34' is interlocked with the rotation of the main rotation body 20 to rotate at a same angular velocity as the main rotation body 20 in the opposite direction CCW to the rotation direction of the main rotation body 20.

As a result, the force receiving rotation body (gear) 34' rotates around the base body 10 (center gear 61) while maintaining the same orientation.

The center gear 61 is fixed to the base body 10 together with the center gear 41 with the bolt 45 as mentioned above.

Since the weight support rotation body (gear) 31, and the force receiving rotation bodies (gears) 34 and 34' each rotates around the base body 10 (center gear 61) while maintaining the same orientation as described above, respective members composing the weight holding mechanism 30 including these members do not relatively move among the respective members, but rotate around the rotation center O of the main rotation body 20 while maintaining the same orientation, as the entire weight holding mechanism 30.

The one embodiment of the present invention is described as above, but the present invention is not limited to the above-described embodiment and can be properly modified and implemented within the scope of the gist of the present invention. For example,

In the above-described embodiment, the weight support rotation body interlocking mechanism 40 has the configuration having the weight support rotation body (gear) 31, the center gear 41 fixed to the base body 10 to be unable to rotate, and the intermediate gears 42, 43, and 44 provided between these gears 31 and 41, but may also have a configuration in which a timing pulley 42p is provided on the intermediate gear 42 which is meshed with the center gear 41 to be integrally rotatable, the weight support rotation body 31 is similarly composed of a timing pulley, and these pulleys are interlocked by a timing belt 46, as shown in Figure 9, for example.

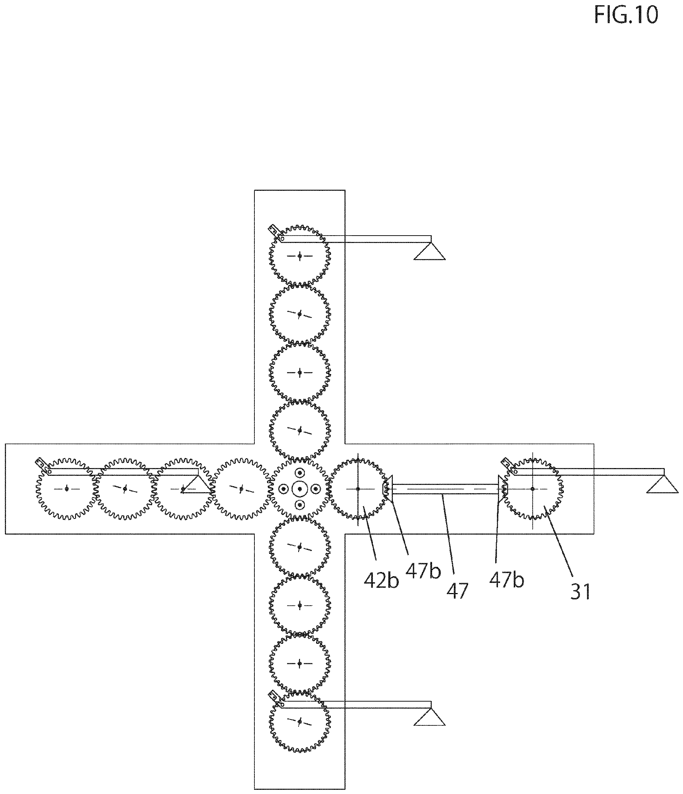

Further, as shown in Figure 10, for example, a bevel gear 42b is provided on the intermediate gear 42 that is meshed with the center gear 41 to be integrally rotatable, the weight support rotation body 31 is also composed of a bevel gear, and these bevel gears can be configured to be interlocked with each other by an interlock rod 47 having bevel gears 47b at both ends.

Further, though not illustrated, the weight support rotation body 31 can be composed of a sprocket, and can be interlocked with a sprocket provided in place of the center gear 41 with a chain.

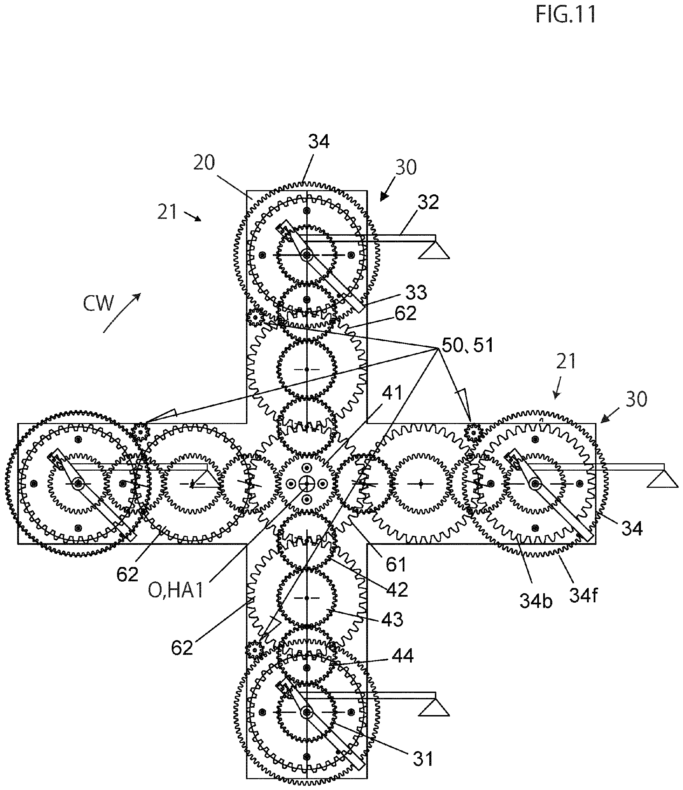

Further, in the above-described embodiment, with respect to the force receiving rotation body (gear) 34 that drives by the power applying mechanism 50, the intermediate gear 62 is not provided between the center gear 61 and the force receiving rotation body 34, but may be provided therebetween (see Figure 11).

Concerning the force receiving rotation body interlocking mechanism 60, the mechanism using the timing pulleys, the mechanism using the bevel gears, and the mechanism using the chain described above can also be applied.

Hereinafter, other embodiments of the rotation device utilizing gravity according to the present invention will be described.

Main differences of a rotation device utilizing gravity of an embodiment a main part of which is shown in Figure 11 from the aforementioned embodiment (Figure 1 and the like) lie in
a point that intermediate gears 62 composing force receiving rotation body interlocking mechanisms 60 are provided for all power receiving rotation bodies (gears) 34 between a center gear 61 and all the force receiving rotation bodies (gears) 34, and
a point that power applying mechanisms 50 are provided for all the force receiving rotation bodies 34, and there is no fundamental difference in other respects.

By the configuration like this, it is possible to miniaturize a power source (a motor 50M, for example) in each of the power applying mechanisms 50, and it becomes easy to improve a balance of the entire device.

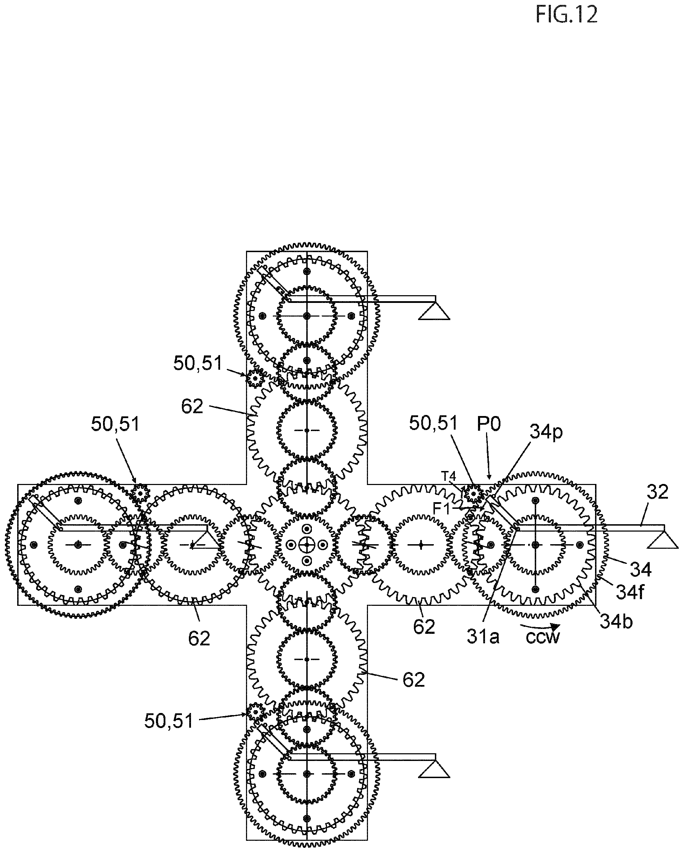

Note that the force receiving rotation body 34 in this embodiment is a double gear, in which a gear 34f on a front side is meshed with a drive gear 51 of the power applying mechanism 50, and a gear 34b on a rear side is meshed with the intermediate gear 62 composing the force receiving rotation body interlocking mechanism 60. In this point, the same also applies to an embodiment shown in Figure 12.

Main differences of a rotation device utilizing gravity of an embodiment a main part of which is shown in Figure 12 from the aforementioned embodiment (Figure 1 and the like) lie in
a point that intermediate gears 62 composing force receiving rotation body interlocking mechanisms 60 are provided for all power receiving rotation bodies (gears) 34 between a center gear 61 and all the force receiving rotation bodies (gears) 34,
a point that power applying mechanisms 50 are provided to all the force receiving rotation bodies (gears) 34, and
a point that the rotation device utilizing gravity is configured without using turning force receiving members 33, and there is no fundamental difference in other respects.

If the intermediate gears 62 composing the force receiving rotation body interlocking mechanisms 60 are provided for all the force receiving rotation bodies 34 between the center gear 61 and all the force receiving rotation bodies 34, and the power applying mechanisms 50 are provided for all the force receiving rotation bodies 34, for example, it becomes possible to decrease a power T4 by each of the power applying mechanisms 50.

In other words, even if the power T4 by the power applying mechanism 50 is decreased, it becomes possible to interlock the force receiving rotation body 34 with rotation of a main rotation body 20 to rotate the force receiving rotation body 34 at a same angular velocity as the main rotation body 20 in an opposite direction CCW to a rotation direction of the main rotation body 20.

Accordingly, even if a turning force T1 of a weight body itself by a weight body 32 is configured to be received at a power receiving position P0 provided at the force receiving rotation body 34 as shown in Figure 12, for example, it becomes possible to interlock the force receiving body 34 with the rotation of the main rotation body 20 to rotate the force receiving rotation body 34 at the same angular velocity as the main rotation body 20 in the opposite direction CCW to the rotation direction of the main rotation body 20.

Further, since a support portion 31a of the weight body 32 in the weight support rotation body 31 is provided at a position where a reaction force F1 from the turning force receiving member 34 does not tries to rotate the weight support rotation body 31 in a same direction as the rotation direction of the main rotation body 20 (a rotation force T3 that tries to rotate the weight support rotation body 31 desirably in an opposite direction is generated), rotation of the weight support rotation body 31 in the opposite direction to the rotation direction of the main rotation body 20 is not hindered by providing the weight body 32.

Thereby, it becomes possible to configure the turning force T1 of the weight body itself by the weight body 32 to be received at the power receiving position P0 provided at the force receiving rotation body 34.

According to the embodiment, it is possible to miniaturize a power source (motor 50M, for example) in each of the power applying mechanisms 50, and it becomes easy to improve a balance of the entire device.

Moreover, since a turning force receiving member 33 is not used, it is possible to reduce the number of components and simplify the structure.

Main differences of a rotation device utilizing gravity of an embodiment a main part of which is shown in Figure 13 from the aforementioned embodiment (Figure 1 and the like) lie in
a point that power applying mechanisms 50 are provided for all force receiving rotation bodies 34, and
a point that the rotation device utilizing gravity is configured without using a force receiving rotation body interlocking mechanism 60, and there is no fundamental difference in other respects.

If the power applying mechanisms 50 are provided for all the force receiving rotation bodies 34, it becomes possible to decrease a power T4 by each of the power applying mechanisms 50 without necessarily providing the force receiving rotation body interlocking mechanisms 60.

In other words, even if the power T4 by the power applying mechanism 50 is decreased, it becomes possible to interlock the force receiving rotation body 34 with rotation of a main rotation body 20 to rotate the force receiving rotation body 34 at a same angular velocity as the main rotation body 20 in an opposite direction CCW to a rotation direction of the main rotation body 20.

Since a turning force receiving member 33 is provided in this embodiment, the power T4 by the power applyingmechanism 50 can be decreased, and since a support portion 31a of a weight body 32 in a weight support rotation body 31 is provided at a position where a reaction force F1 from the turning force receiving member 34 does not tries to rotate the weight support rotation body 31 in a same direction as the rotation direction of the main rotation body 20 (a rotation force T3 to tries to rotate the weight support rotation body 31 in an opposite direction is generated), rotation of the weight support rotation body 31 in the opposite direction to the rotation direction of the main rotation body 20 is not hindered by providing the weight body 32.

Thereby, it becomes possible to interlock the force receiving rotation body 34 with the rotation of the main rotation body 20 with the small power T4 by the power applying mechanism 50 to rotate the force receiving rotation body 34 at the same angular velocity as the main rotation body 20 in the opposite direction CCW to the rotation direction of the main rotation body 20.

In this embodiment, as shown in Figure 13, a drive gear 51 of the power applying mechanism 50 drives the force receiving rotation body (gear) 34 via a double gear (speed reduction gear) 53 having a large gear 53L, and a small gear 53S. The drive gear 51 is meshed with the large gear 53L, and the small gear 53S is meshed with the force receiving rotation body (gear) 34.

In this embodiment, the one drive gear 51 is simultaneously meshed with a pair of speed reduction gears 53 adjacent to each other in a circumferential direction, and the one drive gear 51 (that is, the one power applying mechanism 50) simultaneously drives the two force receiving rotation bodies 34.

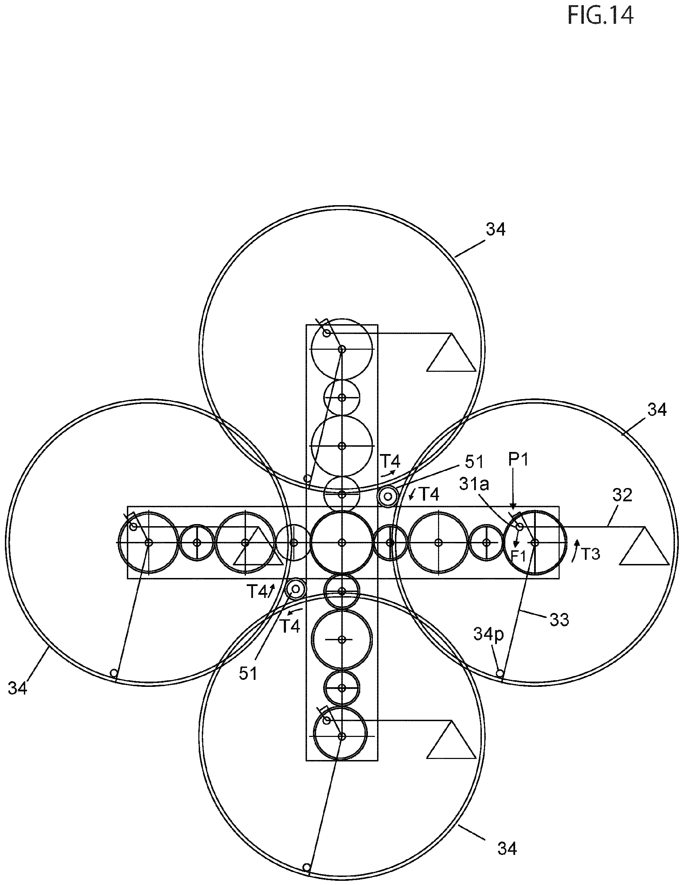

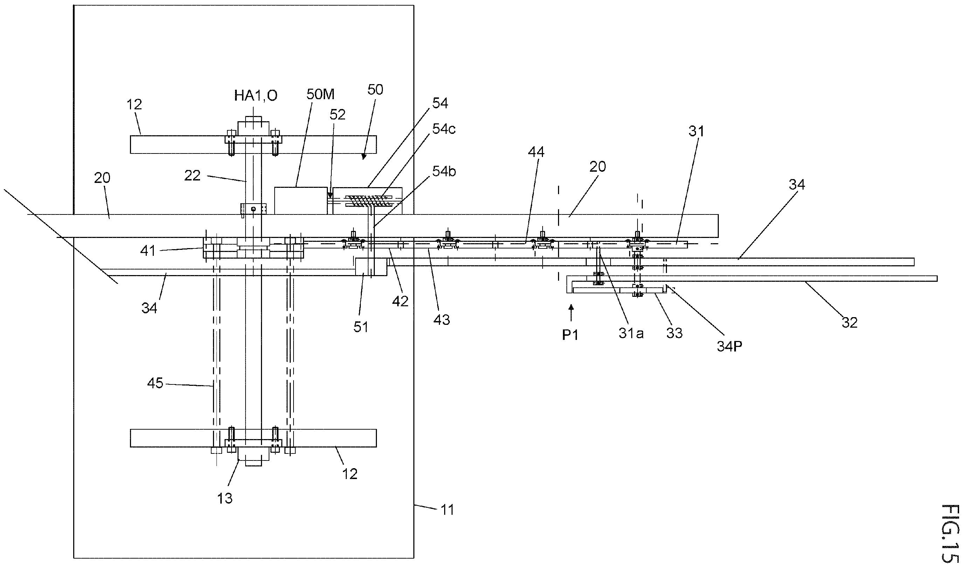

Main differences of a rotation device utilizing gravity of an embodiment a main part of which is shown in Figure 14 and Figure 15 from the aforementioned embodiment (Figure 1 and the like) lie in
apointthatpowerapplyingmechanisms50 (51) areprovided for all force receiving rotation bodies 34, and
a point that the rotation device utilizing gravity is configured without using a force receiving rotation body interlocking mechanism 60, and there is no fundamental difference in other respects.

If the power applying mechanisms 50 are provided for all the force receiving rotation bodies 34, it becomes possible to decrease a power T4 by each of the power applying mechanisms 50 without necessarily providing the force receiving rotation body interlocking mechanisms 60.

In other words, even if the power T4 by the power applying mechanism 50 is decreased, it becomes possible to interlock the force receiving rotation body 34 with rotation of a main rotation body 20 to rotate the force receiving rotation body 34 at a same angular velocity as the main rotation body 20 in an opposite direction CCW to a rotation direction of the main rotation body 20.

Since a turning force receiving member 33 is provided in this embodiment, the power T4 by the power applyingmechanism 50 can be decreased, and since a support portion 31a of a weight body 32 in a weight support rotation body 31 is provided at a position where a reaction force F1 from the turning force receiving member 33 does not tries to rotate the weight support rotation body 31 in a same direction as the rotation direction of the main rotation body 20 (a rotation force T3 to tries to rotate the weight support rotation body 31 in an opposite direction is generated), rotation of the weight support rotation body 31 in the opposite direction to the rotation direction of the main rotation body 20 is not hindered by providing the weight body 32.

Thereby, it becomes possible to interlock the force receiving rotation body 34 with the rotation of the main rotation body 20 with the small power T4 by the power applying mechanism 50 and rotate the force receiving rotation body 34 at a same angular velocity as the main rotation body 20 in the opposite direction CCW to the rotation direction of the main rotation body 20.

In this embodiment, as shown in Figure 14, the drive gear 51 of the power applying mechanism 50 directly drives the force receiving rotation body (gear) 34 composed of a large gear.

In this embodiment, the one drive gear 51 is simultaneously meshed with a pair of force receiving rotation bodies 34 adjacent to each other in a circumferential direction, and the one drive gear 51 (that is, the one power applying mechanism 50) simultaneously drives the two force receiving rotation bodies 34 (see Figure 15).

As shown in Figure 15, the power applying mechanism 50 of this embodiment is configured by having a worm gear with a self-locking function.

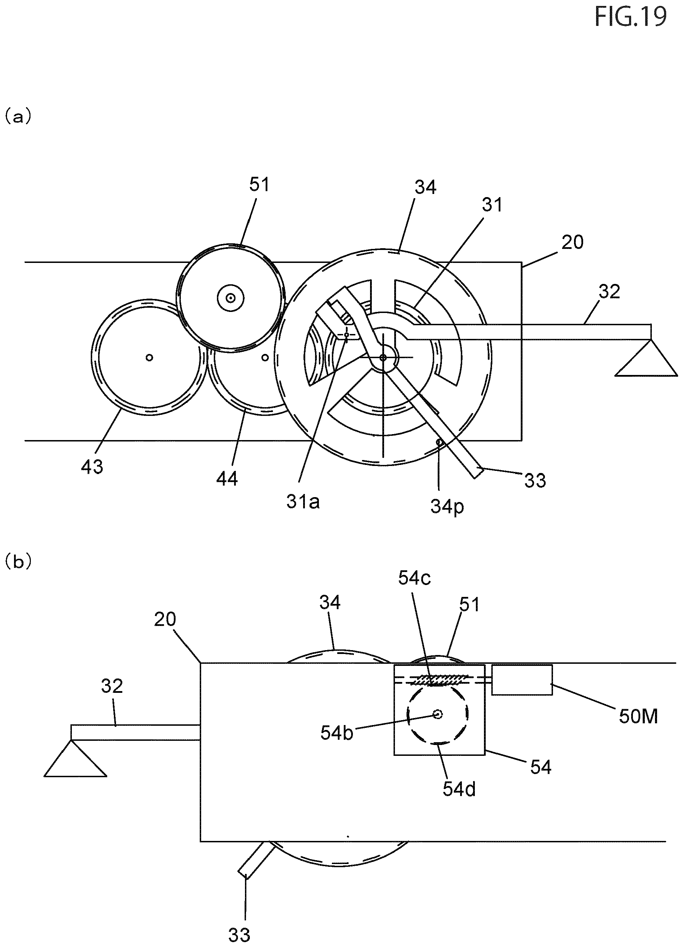

Specifically, the drive applying mechanism 50 includes a motor 50M, and a worm gear box 54 having a worm 54c fixed to an output shaft 52 of the motor 50M, and a worm wheel 54d (see Figure 19) meshed with the worm 54c, and the drive gear 51 is fixed to an output shaft (shaft of the worm wheel 54d) 54b of the worm gear box 54.

By the configuration like this, a large speed reduction ratio is obtained, so that it becomes possible to rotate the force receiving rotation body 34 at a same angular velocity as the main rotation body 20 in an opposite direction to the rotation direction of the main rotation body 20 with a smaller power T4.

Further, the worm gear has a self-locking function, and therefore can prevent reverse rotation of the force receiving rotation body 34, that is, reverse rotation of the main rotation body 20 when the rotation device utilizing gravity is stopped for some reason.

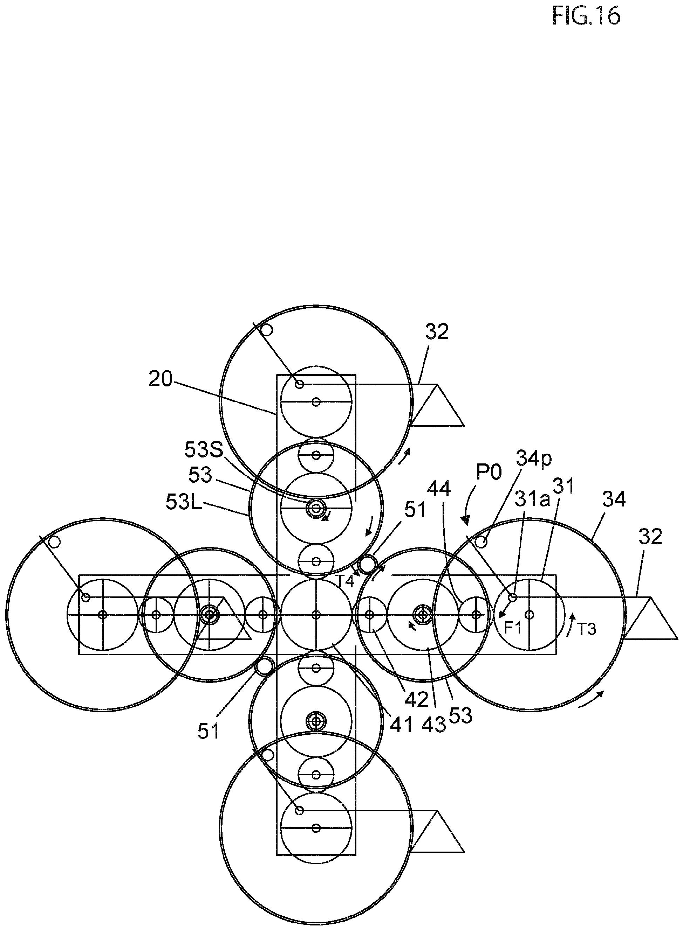

Main differences of a rotation device utilizing gravity of an embodiment a main part of which is shown in Figure 16 from the aforementioned embodiment (Figure 1 and the like) lie in
apointthatpowerapplyingmechanisms50 (51) areprovided for all force receiving rotation bodies 34, and
a point that the rotation device utilizing gravity is configured without using a turning force receiving member 33 and a force receiving rotation body interlocking mechanism 60,
and there is no fundamental difference in other respects .

In other words, a main difference of the rotation device utilizing gravity of the embodiment the main part of which is shown in Figure 16 from the embodiment shown in Figure 13 lies in
a point that the rotation device utilizing gravity is configured without using the turning force receiving member 33, and there is no fundamental difference in other respects.

If the power applying mechanisms 50 are provided for all the force receiving rotation bodies 34, it becomes possible to decrease a power T4 by each of the power applying mechanisms 50 without necessarily providing the turning force receiving members 33 and the force receiving rotation body interlocking mechanisms 60.

In other words, even if the power T4 by the power applying mechanism 50 is decreased, it becomes possible to interlock the force receiving rotation body 34 with rotation of a main rotation body 20 to rotate the force receiving rotation body 34 at a same angular velocity as the main rotation body 20 in an opposite direction CCW to a rotation direction of the main rotation body 20.

Since a support portion 31a of a weight body 32 in a weight support rotation body 31 is also provided at a position where a reaction force F1 from the turning force receiving member 33 does not tries to rotate the weight support rotation body 31 in a same direction as the rotation direction of the main rotation body 20 (a rotation force T3 to tries to rotate the weight support rotation body 31 in an opposite direction is generated) in this embodiment, rotation of the weight support rotation body 31 in the opposite direction to the rotation direction of the main rotation body 20 is not hindered by providing the weight body 32.

Thereby, it becomes possible to interlock the force receiving rotation body 34 with the rotation of the main rotation body 20 with the small power T4 by the power applying mechanism 50 and rotate the force receiving rotation body 34 at the same angular velocity as the main rotation body 20 in the opposite direction CCW to the rotation direction of the main rotation body 20.

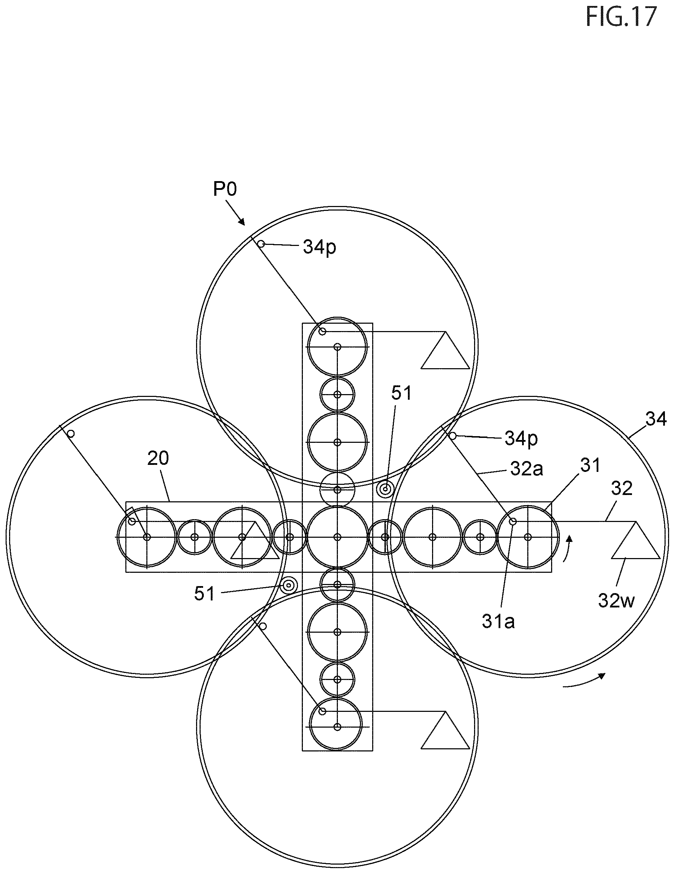

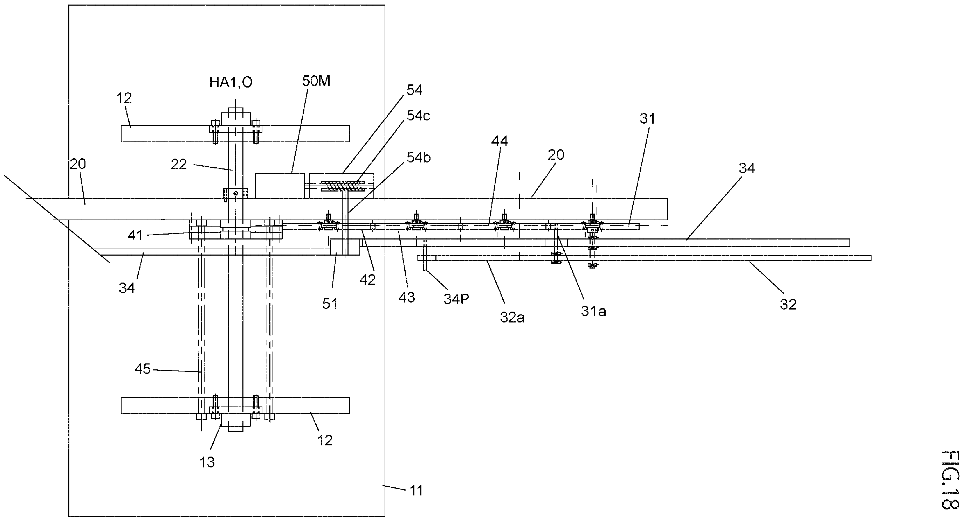

Main differences of a rotation device utilizing gravity of an embodiment a main part of which is shown in Figure 17 and Figure 18 from the aforementioned embodiment (Figure 1 and the like) lie in
a point that power applying mechanisms 50 (51) are provided for all force receiving rotation bodies 34, and
a point that the rotation device utilizing gravity is configured without using turning force receiving members 33 and force receiving rotation body interlocking mechanisms 60,
and there is no fundamental difference in other respects .

In other words, a main difference of the rotation device utilizing gravity of the embodiment the main part of which is shown in Figure 17 and Figure 18 from the embodiment shown in Figure 14 and Figure 15 lies in
a point that the rotation device utilizing gravity is configured without using the turning force receiving members 33, and there is no fundamental difference in other respects.

In this embodiment, a power T4 is decreased by increasing a diameter of each of the force receiving rotation bodies 34 and providing a pin 34p close to an outer peripheral portion of each of the force receiving rotation bodies, and by configuring a contact arm 32a with the pin 34p in a lever-shaped weight body 32 as long as possible.

The power applying mechanism 50 in this embodiment is also configured by having a worm gear with a self-locking function, and therefore it is possible to rotate the force receiving rotation body 34 at a same angular velocity as a main rotation body 20 in an opposite direction to a rotation direction of the main rotation body 20 with the smaller power T4.

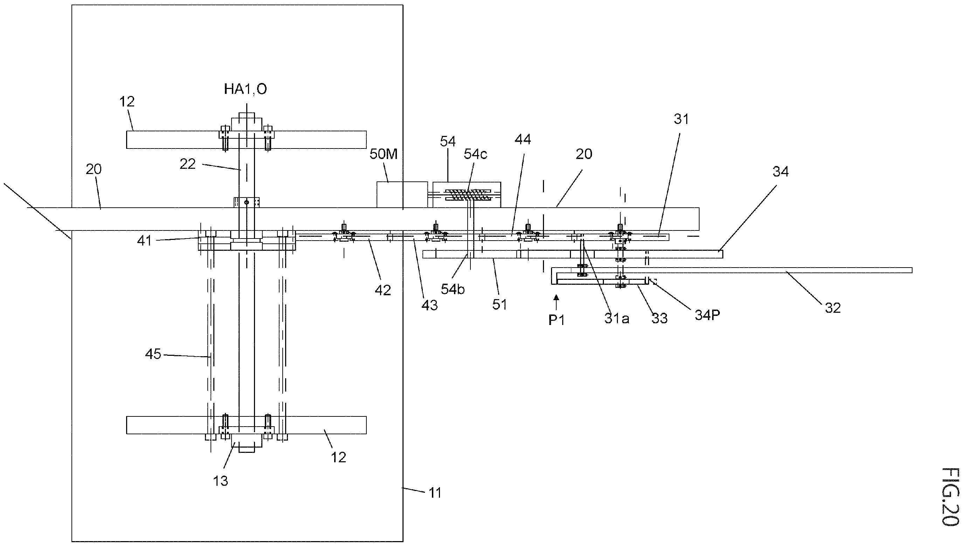

An embodiment a main part of which is shown in Figure 19 and Figure 20 shows a modification of the power applying mechanism 50 in the embodiment shown in Figure 1 and Figure 4 to Figure 6.

Amain difference of this embodiment from the embodiment shown in Figure 1 and Figure 4 to Figure 6 lies in a point that a power applying mechanism 50 is configured by having a worm gear with a self-locking function, and there is basically no basic change in the other points.

The power applying mechanism 50 shown in Figure 19 and Figure 20 have a same basic structure as the drive applying mechanism shown in Figure 15, and includes a motor 50M, and a worm gear box 54 having a worm 54c fixed to an output shaft 52 of the motor 50M and a worm wheel 54d that is meshed with the worm 54c, and a drive gear 51 is fixed to an output shaft (shaft of the worm wheel 54d) 54b of the worm gear box 54.

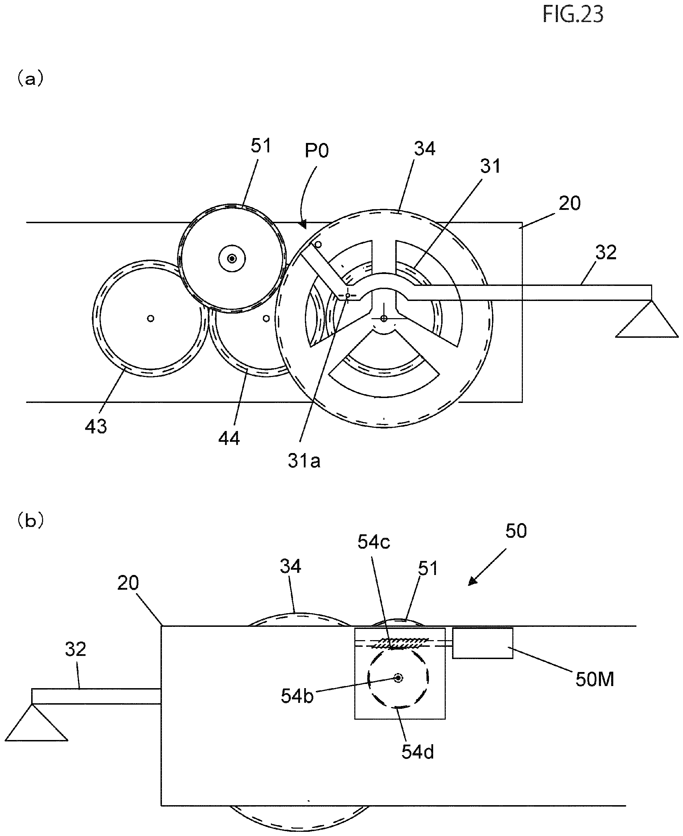

The power applying mechanism 50 like this is also applicable to an embodiment without having turning force receiving members 33, for example, an embodiment shown in Figure 23.

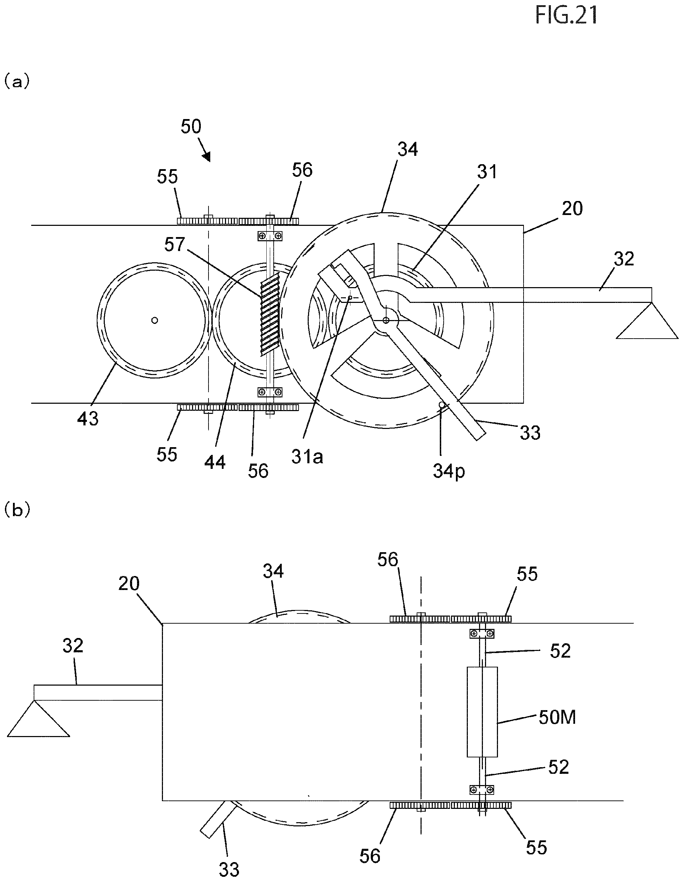

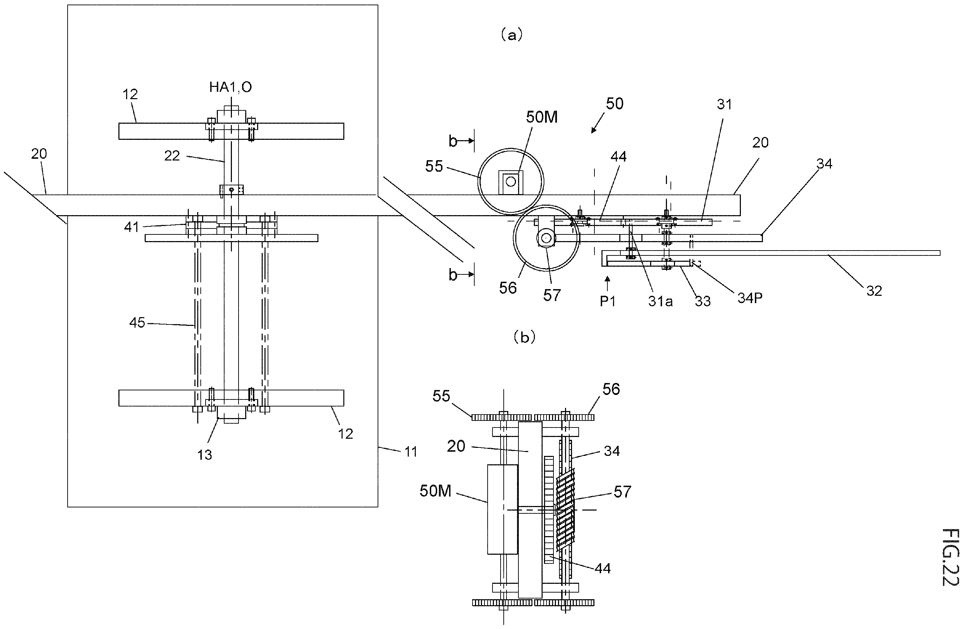

An embodiment a main part of which is shown in Figure 21 and Figure 22 shows a modification of the power applying mechanism 50 in the embodiment shown in Figure 1 and Figure 4 to Figure 6.

Amain difference of this embodiment from the embodiment shown in Figure 1 and Figure 4 to Figure 6 lies in a point that a power applying mechanism 50 is configured by having a worm gear with a self-locking function, and there is no fundamental difference in other respects.

The power applying mechanism 50 shown in Figure 21 and Figure 22 includes a motor 50M having output shafts 52 on a top and a bottom, drive gears 55 fixed respectively to a top and a bottom of the output shafts 52, and a worm 57 driven by the drive gears 55 via transmission gears 56 respectively fixed to a top and a bottom of a shaft of the worm 57, and a force receiving rotation body 34 configured as a worm wheel is rotated at a same angular velocity as a main rotation body 20 in an opposite direction to a rotation direction of the main rotation body 20 by this worm 57.

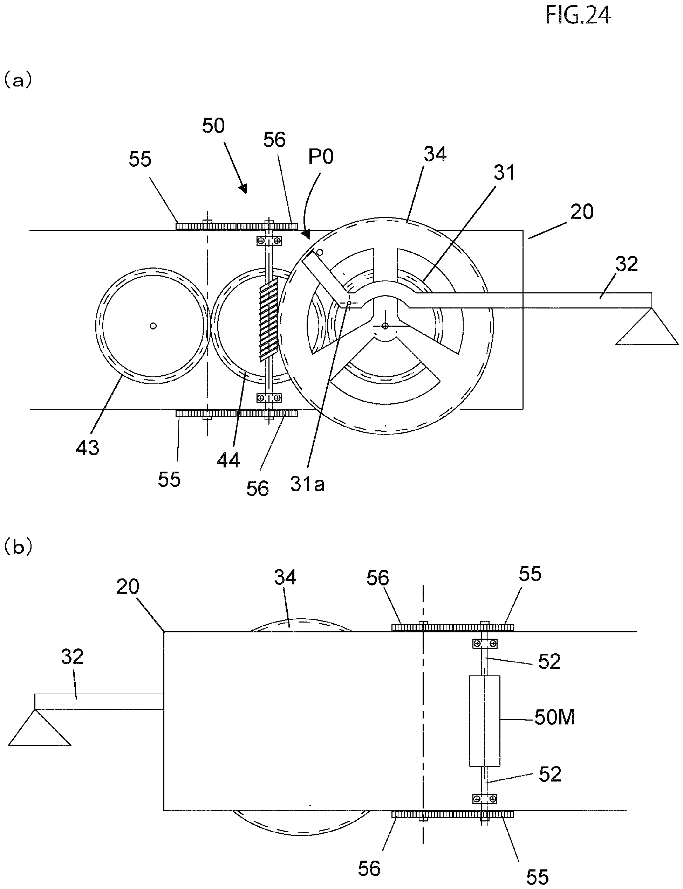

The power applying mechanism 50 like this is also applicable to an embodiment without having the turning force receiving member 33 and the force receiving rotation body interlocking mechanism 60, for example, an embodiment as shown in Figure 24.

The embodiments of the present invention are described thus far, but the present invention is not intended to be limited to the above-described embodiments and can be properly modified and implemented within the scope of the gist of the present invention. For example, component parts or component mechanisms in the respective embodiments can be carried out by being properly combined.

### Industrial Applicability

The rotation device utilizing gravity of this invention can utilize the rotation of the main rotation body 20 as power. For example, it is also possible to generate electric power by connecting the shaft 22 of the main rotation body 20 to a power generating motor.

### Reference Signs List

10: base body
20: main rotation body
21: installation position
30: weight holding mechanism
31: weight support rotation body
31a: support portion
32: weight body
33: turning force receiving member
34: force receiving rotation body
40: weight support rotation body interlocking mechanism
50: power applying mechanism
60: force receiving rotation body interlocking mechanism

## Claims

1. A rotation device utilizing gravity, comprising:
a base body (10);
a main rotation body (20) mounted rotatably around a horizontal axis with respect to the base body (10); and
a plurality of weight holding mechanisms (30) each provided at an installation position (21) on the main rotation body, separated by a rotation radius R from a rotation center O of the main rotation body (20), and equiangularly spaced from one another with respect to the rotation center O,
wherein the weight holding mechanisms (30) each includes
a weight support rotation body (31) provided rotatably around the horizontal axis with respect to the main rotation body (20) in the installation position (21),
a weight body (32) that is a weight body turnably supported at a support portion (31a) other than a rotation center of the weight support rotation body (31) with respect to the weight support rotation body (31), and tries to turn the weight body itself in a same direction as the main rotation body,
a turning force receiving member (33) that is provided to be turnable concentrically with the rotation center of the weight support rotation body (31), and tries to turn by receiving a turning force of the weight body itself by the weight body (32) at a first turning force receiving position (P1), and
a force receiving rotation body (34) that is provided to be rotatable concentrically with the rotation center of the weight support rotation body (31), and tries to rotate by receiving a turning force from the turning force receiving member (33) at a second turning force receiving position (P2),
when a distance from a rotation center of the force receiving rotation body (34) to the first turning force receiving position (P1) is L1, and a distance from the rotation center to the second turning force receiving position (P2) is L2, L1 and L2 are configured to satisfy L1 < L2, and
the support portion (31a) of the weight body (32) in the weight support rotation body (31) is provided at a position where a reaction force from the turning force receiving member (33) does not tries to rotate the weight support rotation body (31) in a same direction as a rotation direction of the main rotation body (20),
the rotation device utilizing gravity further comprising:
a weight support rotation body interlocking mechanism (40) that interlocks the weight support rotation body (31) in the weight holding mechanism (30) with rotation of the main rotation body (20) to rotate the weight support rotation body (31) at a same angular velocity as the main rotation body (20) in an opposite direction to the rotation direction of the main rotation body (20);
a power applying mechanism (50) that applies power that rotates the force receiving rotation body (34) at a same angular velocity as the main rotation body (20) in the opposite direction to the rotation direction of the main rotation body (20) to the force receiving rotation body (34) in at least one weight holding mechanism (30) of the plurality of weight holding mechanisms (30); and
force receiving rotation body interlocking mechanisms (60) that interlock at least force receiving rotation bodies (34') of the weight holding mechanisms other than the weight holding mechanism in which the force receiving rotation body (34) is rotated by the power applying mechanism (50), of the plurality of weight holding mechanisms (30), with the rotation of the main rotation body (20) to rotate the force receiving rotation bodies (34') at a same angular velocity as the main rotation body (20) in the opposite direction to the rotation direction of the main rotation body (20).

2. A rotation device utilizing gravity, comprising:
a base body (10);
a main rotation body (20) mounted rotatably around a horizontal axis with respect to the base body (10); and
a plurality of weight holding mechanisms (30) each provided at an installation position (21) on the main rotation body, separated by a rotation radius R from a rotation center O of the main rotation body (20), and equiangularly spaced from one another with respect to the rotation center O,
wherein the weight holding mechanisms (30) each includes
a weight support rotation body (31) provided rotatably around the horizontal axis with respect to the main rotation body (20) in the installation position (21),
a weight body (32) that is a weight body turnably supported at a support portion (31a) other than a rotation center of the weight support rotation body (31) with respect to the weight support rotation body (31), and tries to turn the weight body itself in a same direction as the main rotation body, and
a force receiving rotation body (34) that is provided to be rotatable concentrically with the rotation center of the weight support rotation body (31), and tries to rotate by receiving a turning force of the weight body itself by the weight body (32) at a power receiving position (P0), and
the support portion (31a) of the weight body (32) in the weight support rotation body (31) is provided at a position where a reaction force from the force receiving rotation body (34) does not tries to rotate the weight support rotation body (31) in a same direction as a rotation direction of the main rotation body (20),
the rotation device utilizing gravity further comprising:
a weight support rotation body interlocking mechanism (40) that interlocks the weight support rotation body (31) in the weight holding mechanism (30) with rotation of the main rotation body (20) to rotate the weight support rotation body (31) at a same angular velocity as the main rotation body (20) in an opposite direction to the rotation direction of the main rotation body (20);
a power applying mechanism (50) that applies power that rotates the force receiving rotation body (34) at a same angular velocity as the main rotation body (20) in the opposite direction to the rotation direction of the main rotation body (20) to the force receiving rotation body (34) in at least one weight holding mechanism (30) of the plurality of weight holding mechanisms (30); and
force receiving rotation body interlocking mechanisms (60) that interlock at least force receiving rotation bodies (34') of the weight holding mechanisms other than the weight holding mechanism in which the force receiving rotation body (34) is rotated by the power applying mechanism (50), of the plurality of weight holding mechanisms (30), with the rotation of the main rotation body (20) to rotate the force receiving rotation bodies (34') at a same angular velocity as the main rotation body (20) in the opposite direction to the rotation direction of the main rotation body (20).

3. A rotation device utilizing gravity, comprising:
a base body (10);
a main rotation body (20) mounted rotatably around a horizontal axis with respect to the base body (10); and
a plurality of weight holding mechanisms (30) each provided at an installation position (21) on the main rotation body, separated by a rotation radius R from a rotation center O of the main rotation body (20), and equiangularly spaced from one another with respect to the rotation center O,
wherein the weight holding mechanisms (30) each includes
a weight support rotation body (31) provided rotatably around the horizontal axis with respect to the main rotation body (20) in the installation position (21),
a weight body (32) that is a weight body turnably supported at a support portion (31a) other than a rotation center of the weight support rotation body (31) with respect to the weight support rotation body (31), and tries to turn the weight body itself in a same direction as the main rotation body,
a turning force receiving member (33) that is provided to be turnable concentrically with the rotation center of the weight support rotation body (31), and tries to turn by receiving a turning force of the weight body itself by the weight body (32) at a first turning force receiving position (P1), and
a force receiving rotation body (34) that is provided to be rotatable concentrically with the rotation center of the weight support rotation body (31), and tries to rotate by receiving a turning force from the turning force receiving member (33) at a second turning force receiving position (P2),
when a distance from a rotation center of the force receiving rotation body (34) to the first turning force receiving position (P1) is L1, and a distance from the rotation center to the second turning force receiving position (P2) is L2, L1 and L2 are configured to satisfy L1 < L2, and
the support portion (31a) of the weight body (32) in the weight support rotation body (31) is provided at a position where a reaction force from the turning force receiving member (33) does not tries to rotate the weight support rotation body (31) in a same direction as a rotation direction of the main rotation body (20),
the rotation device utilizing gravity further comprising:
a weight support rotation body interlocking mechanism (40) that interlocks the weight support rotation body (31) in the weight holding mechanism (30) with rotation of the main rotation body (20) to rotate the weight support rotation body (31) at a same angular velocity as the main rotation body (20) in an opposite direction to the rotation direction of the main rotation body (20); and
a power applying mechanism (50) that applies power that rotates the force receiving rotation body (34) at a same angular velocity as the main rotation body (20) in the opposite direction to the rotation direction of the main rotation body (20) to the force receiving rotation body (34) in at least one weight holding mechanism (30) of the plurality of weight holding mechanisms (30).

4. A rotation device utilizing gravity, comprising:
a base body (10);
a main rotation body (20) mounted rotatably around a horizontal axis with respect to the base body (10); and
a plurality of weight holding mechanisms (30) each provided at an installation position (21) on the main rotation body, separated by a rotation radius R from a rotation center O of the main rotation body (20), and equiangularly spaced from one another with respect to the rotation center O,
wherein the weight holding mechanisms (30) each includes
a weight support rotation body (31) provided rotatably around the horizontal axis with respect to the main rotation body (20) in the installation position (21),
a weight body (32) that is a weight body turnably supported at a support portion (31a) other than a rotation center of the weight support rotation body (31) with respect to the weight support rotation body (31), and tries to turn the weight body itself in a same direction as the main rotation body, and
a force receiving rotation body (34) that is provided to be rotatable concentrically with the rotation center of the weight support rotation body (31), and tries to rotate by receiving a turning force of the weight body itself by the weight body (32) at a power receiving position (P0), and
the support portion (31a) of the weight body (32) in the weight support rotation body (31) is provided at a position where a reaction force from the force receiving rotation body (34) does not tries to rotate the weight support rotation body (31) in a same direction as a rotation direction of the main rotation body (20),
the rotation device utilizing gravity further comprising:
a weight support rotation body interlocking mechanism (40) that interlocks the weight support rotation body (31) in the weight holding mechanism (30) with rotation of the main rotation body (20) to rotate the weight support rotation body (31) at a same angular velocity as the main rotation body (20) in an opposite direction to the rotation direction of the main rotation body (20); and
power applying mechanisms (50) that apply power that rotates force receiving rotation bodies (34) at a same angular velocity as the main rotation body (20) in the opposite direction to the rotation direction of the main rotation body (20) to the force receiving rotation bodies (34) in all the weight holding mechanisms (30) of the plurality of weight holding mechanisms (30) .

5. The rotation device utilizing gravity according to claim 1 or 2,
wherein an even number of four or more of the weight holding mechanisms (30) are provided, and
the power by the power applying mechanism (50) is applied to the weight holding mechanisms (30) provided in at least a pair of installation positions (21) that are point-symmetrical with respect to the rotation center of the main rotation body (20).

6. The rotation device utilizing gravity according to any one of claims 1 to 4,
wherein the power applying mechanism (50) is configured by having a worm gear with a self-locking function.
